# EUROPEAN PATENT APPLICATION

(11) **EP 4 782 182 A1**
(43) Date of publication of application: **29.07.2026**
(21) Application number: 25206295.5
(22) Date of filing: 02.10.2025
(51) Int. Cl.: B29C 64/124, B29C 64/393, B33Y 10/00, B33Y 30/00, B33Y 50/02

(54) **A METHOD FOR MANUFACTURING AT LEAST ONE THREE-DIMENSIONAL OBJECT VIA VOLUMETRIC PRINTING**

(30) Priority: 24.01.2025 EP 25153766
(71) Applicant: xolo GmbH, 12489 Berlin (DE)
(72) Inventor: Arzhangnia, Yousef, 12489 Berlin (DE); Herder, Martin, 12489 Berlin (DE); Reuter, Marcus, 12489 Berlin (DE); Garmhausen, Yves, 12489 Berlin (DE)
(74) Representative: Hafner & Kohl PartmbB

(57) **Abstract**

A method for manufacturing a three-dimensional object via volumetric printing.

## Description

A method for manufacturing at least one three-dimensional object via volumetric printing

### Field of the invention

The invention relates to a method for manufacturing at least one three-dimensional object via volumetric printing.

### Background art

Methods for manufacturing a three-dimensional object via volumetric printing have been generally known in the prior art. Such methods typically, comprise an irradiation process of irradiating a photocurable resin in a working volume with light of at least one wavelength. Particularly, such volumetric printing techniques comprise irradiating a photocurable resin in a working volume with light of at least two different wavelengths.

While known volumetric printing methods generally facilitate manufacturing three-dimensional objects with good properties, undesired deformation effects of the printed three-dimensional objects, e.g. caused by bending, warping, etc. of the printed three-dimensional objects, can sometimes be observed. Respective deformation effects of the printed three-dimensional objects can arise from factors such as e.g. local thermal stresses within the three-dimensional objects, material shrinkage, or non-uniform reaction rates of the photocurable resin during the volumetric printing process, etc. Yet, also processes after the actual volumetric printing process in which a three-dimensional object or a respective green body is manufactured, such as post-processing processes of an as-printed three-dimensional object, can lead to undesired deformation effects, e.g. caused by inhomogeneous post-curing processes.

As such, there is a general need to improve respective methods for manufacturing a three-dimensional object via volumetric printing, particularly by finding a way to overcome issues related with respective deformation effects, such that the improvement should enable manufacturing three-dimensional objects which improved properties, i.e. particularly lower undesired deformation and thus, higher geometrical accuracy.

It is therefore, the objective of the invention to provide an improved method for manufacturing a three-dimensional object via volumetric printing which overcomes at least some of the drawbacks of existing methods for manufacturing a three-dimensional object via volumetric printing.

### Summary of the invention

A first aspect of the invention relates to a method for manufacturing a three-dimensional object via volumetric printing. A respective three-dimensional object which can be manufactured in accordance with the method can be a technical component or form part of a technical component. Particularly, a respective technical component can be an optical component, such as e.g. an optical lens or an array of optical lenses. Further examples of an optical component comprise intraocular lenses, ophthalmic lenses, contact lenses, endoscope lenses, microlenses, or optical implants, such as e.g. cornea implants. Hence, the method can be a method for manufacturing a three-dimensional optical component, such as e.g. an optical lens or an array of optical lenses, an intraocular lens, an ophthalmic lens, a contact lens, an endoscope lens, a microlens, or an optical implant, such as e.g. a cornea implant. Yet, other technical components and three-dimensional objects, respectively are contemplated. Another exemplary technical component can be a mold or a mold element, such as e.g. a mold halve, a mold insert, etc., for molding at least one technical part. Hence, the method can be a method for manufacturing a three-dimensional mold or mold element, respectively. The mold or mold element, respectively can define, e.g. via at least one shaping contour, at least one cavity, wherein the at least one cavity at least partially represents the shape of the at least one technical part which is to be molded with the mold or mold element, respectively. A respective technical part, which can be molded with the mold or the mold element, respectively can be an optical component, such as e.g. an optical component, such as e.g. an optical lens, as mentioned above, for instance.

Another aspect of the invention, which can be an independent aspect of the invention, can be a method of manufacturing at least one technical part with at least one mold or mold element, respectively, wherein the at least one mold or mold element, respectively has been manufactured in accordance with the first aspect of the invention, particularly with a volumetric printing process according to step a) of the method of the first aspect of the invention, such that all annotations made in connection with step a) of the method of the first aspect of the invention can apply to this other aspect of the invention. Hence, at least one mold or mold element, respectively which has been manufactured in accordance with the first aspect of the invention, particularly with a volumetric printing process according to step a) of the method of the first aspect of the invention, can be used for manufacturing at least one technical part, which technical part can e.g. be, as indicated above, an optical component, particularly an optical component as mentioned above.

The method of manufacturing at least one technical part with at least one mold or mold element, respectively can be implemented in or with a molding apparatus. The molding apparatus can be or comprise a cast molding apparatus or an injection molding apparatus, for instance.

The method of manufacturing at least one technical part with at least one mold or mold element, respectively can comprise at least one step of filling the at least one mold or mold element, respectively with a moldable material. Particularly, the method of manufacturing at least one technical part with at least one mold or mold element, respectively can comprise a step of filling a cavity defined by the at least one mold or mold element, respectively with a moldable material. Filling of the mold or mold element, respectively can be at least partially automatically effected via a filling device, particularly under control of a hardware- and/or software-embodied controller.

A respective moldable material can be or comprise a curable material, particularly a photo-curable material or thermo-curable material. As such, the method can comprise at least one step of: irradiating a photocurable moldable material with electromagnetic radiation to effect curing of the photocurable material to form at least one technical part and/or at least one step of: heating a thermo-curable moldable material to effect curing of the photocurable material to form at least one technical part. The step of irradiating the curable material can follow the aforementioned step of filling the mold or mold element, respectively with the moldable material.

The moldable material can be filled into at least one mold or mold element, respectively or a cavity defined by the at least one mold or mold element, respectively at a temperature above room temperature. As an example, The moldable material can be filled into at least one mold or mold element, respectively or a cavity defined by the at least one mold or mold element, respectively at a temperature of at least one of: at least 50°C, at least 60°C, at least 70°C, at least 80°C, at least 90°C, at least 100°C, at least 110°C, at least 120°C, at least 130°C, at least 140°C, at least 150°C, at least 160°C, at least 170°C, at least 180°C, at least 190°C, at least 200°C or above.

Additionally or alternatively, the at least one mold or mold element, respectively can be tempered, i.e. particularly heated and/or cooled, via at least one tempering device assigned thereto. A respective tempering device can comprise one or more tempering elements provided by outside and/or inside the at least one mold or mold element, respectively. Particularly, respective one or more tempering elements can be provided close to, particularly underneath, a wall which defines a cavity.

In either case, a respective technical part, once formed in the at least one mold or mold element, respectively can be removed from the at least one mold or mold element, respectively. Removing a respective technical part from the at least one mold or mold element, respectively can be at least partially automatically effected with a removal device which can be or comprise a handling device, for example. As an example, a respective handling device can be or comprise a robot.

In either case, a respective technical part, once formed in the at least one mold or mold element, respectively can undergo at least one post-processing step. As an example, a respective post-processing step can comprise at least one post-curing process of the technical part; at least one coating step in which at least one surface of the technical part is provided with a coating, particularly a functional coating, such as e.g. an optical coating, a protective coating, an anti-sticking coating, a sticking coating, etc.; at least one machining step in which at least one surface of the technical part is machined, e.g. to achieve or maintain desired geometrical tolerances.

In either case, also a respective mold or mold element, respectively can undergo at least one post-processing step. As an example, a respective post-processing step can comprise at least one post-curing process of the mold or mold element respectively; at least one coating step in which at least one surface of the mold or mold element respectively is provided with a coating, particularly a functional coating, such as e.g. an optical coating, a protective coating, an anti-sticking coating, a sticking coating, etc.; at least one machining step in which at least one surface of the mold or mold element respectively is machined, e.g. to achieve or maintain desired geometrical tolerances. Particularly, a respective mold or mold element, respectively can be provided with a coating, such as e.g. an anti-sticking coating, with enables easy removal of a part molded therewith.

A respective moldable material can be different from the material forming the mold or mold element, respectively to avoid undesired chemical or physical interaction, particularly interaction which may cause undesired sticking, between the mold or mold element, respectively and the technical part molded therewith.

A respective moldable material can be or comprise a moldable polymer material. A respective moldable polymer material can be a carbon-based polymer, such as e.g. a thermoplastic polymer or a thermoset polymer. As an example, a carbon-based polymer can be or comprise an aliphatic polymer which can comprise one or more functional groups, such as e.g. one or more acrylic groups, carboxyl groups, carbonyl groups, epoxy groups, peptide groups, fluorinated groups, etc., for instance. Alternatively or additionally, a respective moldable polymer material can be a silicon-based polymer. As an example, a silicon-based polymer can be or comprise a polysiloxane polymer, for instance.

Particularly, when the at least one technical part to be molded is or comprises an optical component, the moldable material can be or comprise a moldable material having a high transparency, e.g. a transparency above 60%, particularly above 70%, more particularly above 80%, in the visible wavelength regime.

Irrespective of its concrete chemical configuration, a respective moldable material can comprise one or more functional additives to change, particularly enhance, the one or more properties of the moldable material. As such, the moldable material can represent a matrix in which one or more functional additives are distributed. Respective additives can e.g. comprise at least one additive which changes/influences at least one of the following properties of the moldable material: the acoustical properties, the haptic properties, the optical properties, the fluorescent properties, the mechanical properties, the rheological properties, the electrical properties, the thermal properties, the magnetic properties, the flame retardancy properties, etc.

As an alternative to an implementation of the method to manufacture a mold or a mold element, respectively, another aspect of the invention, which can be another independent aspect of the invention, can be a method of manufacturing a mold from a technical component, wherein the technical component has been manufactured in accordance with the first aspect of the invention, particularly with a volumetric printing process according to step a) of the method of the first aspect of the invention, such that all annotations made in connection with step a) of the method of the first aspect of the invention can apply to this other aspect of the invention. Hence, at least one technical component which has been manufactured in accordance with the first aspect of the invention, particularly with a volumetric printing process according to step a) of the method of the first aspect of the invention, can be used for manufacturing at least one mold or mold element, respectively. Hence, at least one technical component which has been manufactured in accordance with the first aspect of the invention particularly with a volumetric printing process according to step a) of the method of the first aspect of the invention, can be used as a positive for manufacturing a mold or mold element, respectively which comprises a negative of the respective technical component. Again, a respective technical component can e.g. be or comprise an optical element as mentioned above.

A respective technical component which has been manufactured in accordance with the first aspect of the invention particularly with a volumetric printing process according to step a) of the method of the first aspect of the invention, can be used as a positive for manufacturing a mold or mold element, respectively can be provided with a functional coating, such as e.g. an anti-sticking coating, which enables easy removal of a mold or mold element, respectively (the negative) which comprises a negative of the respective technical component from the technical component (the positive), particularly as there is no undesired interaction between the surface of the technical component (the positive) and the mold or mold element, respectively (the negative) formed thereon.

According to an exemplary implementation of the aforementioned method, at least one technical component which has been manufactured in accordance with the first aspect of the invention particularly with a volumetric printing process according to step a) of the method of the first aspect of the invention, can be at least partially embedded in a forming material from which the mold or mold element, respectively is to be formed. Embedding the at least one technical component in a forming material can also be or comprise pouring a forming material over the at least one technical component and then solidifying the forming material so as to create a negative of the technical component.

The method of the first aspect of the invention comprises in a first step (step a)), a step of performing a volumetric printing process to manufacture at least one three-dimensional object. Step a) thus, comprises a volumetric printing process in which at least one three-dimensional object is manufactured. The direct result of the volumetric printing process of step a) can be at least one green object which can require one or more post-processing steps, e.g. one or more post-curing steps, for converting the at least one green object at least in at least one brown object.

Step a) is thus, typically performed with a volumetric printing device which is configured to implement a volumetric printing process to manufacture at least one three-dimensional object. The volumetric printing process is performed on basis of data comprising information of a geometric model of the at least one three-dimensional object to be manufactured. Respective data can be or comprise CAD-data or STL-data, for example. Respective data can thus, comprise information which can describe a surface, particularly a triangulated surface, of a model of the at least one three-dimensional object to be manufactured, e.g. by at least one of: unit normal, vectors, vertices, etc. As such, respective data can be provided in a CAD-data format or a STL-data format, for example. Yet, other data formats are contemplated.

Particularly, data comprising information of a geometric model of the at least one three-dimensional object to be manufactured can be further processed, via suitable data processing means, such as e.g. algorithms, software, etc., to generate a projection of images or images corresponding to a cross-sectional geometry of a three-dimensional object to be manufactured or a plurality of points or lines corresponding to a cross-sectional geometry of the three-dimensional object to be manufactured. A respective projection of images or respective images can then be, in the course of the volumetric printing process of step a) radiated from one or more directions towards the working volume to effect polymerization of a photocurable resin provided in a working volume, which photocurable resin is locally polymerized to form, via volumetric printing, the at least one three-dimensional object.

As such, further processing of data comprising information of a geometric model of the at least one three-dimensional object to be manufactured can result in that images corresponding to a cross-sectional geometry of a three-dimensional object to be manufactured or a plurality of points or lines corresponding to a cross-sectional geometry of the three-dimensional object to be manufactured can be directly generated. In other words, images corresponding to a cross-sectional geometry of a three-dimensional object to be manufactured or a plurality of points or lines corresponding to a cross-sectional geometry of the three-dimensional object to be manufactured can be directly generated from a three-dimensional model of the three-dimensional object to be manufactured, and the three-dimensional object to be manufactured can be directly manufactured on basis of such images, points, or lines corresponding to a cross-sectional geometry of the object to be manufactured. This is a specific benefit of volumetric printing process which comprise multi-color photopolymerization, particularly dual-color photopolymerization, and is not possible with other volumetric printing processes such as particularly, volumetric printing processes which comprise computed axial lithography as these require a different, and typically more complex, data processing of a geometric model of a three-dimensional object to be manufactured to obtain information on basis of which a volumetric printing process can be initiated.

Yet, also a geometric model of the at least one three-dimensional object can be directly generated, particularly reproduced, via suitable data processing means, such as e.g. algorithms, software, etc., from one or more images corresponding to a cross-sectional geometry of the three-dimensional object or from a plurality of points or lines corresponding to a cross-sectional geometry of the three-dimensional object. As such, the method, specifically when it comprises multi-color photopolymerization, particularly dual-color photopolymerization, can generally comprise a data processing step in which images corresponding to a cross-sectional geometry of a three-dimensional object or a plurality of points or lines corresponding to a cross-sectional geometry of the three-dimensional object can be directly generated via data processing of a geometric model of the at least one three-dimensional object. Such a data processing can e.g. comprise slicing the geometric model of the at least one three-dimensional object into a plurality of slices of defined geometry, particularly defined thickness, via a slicing algorithm or a slicing software, respectively.

Additionally or alternatively, the method, specifically when it comprises multi-color photopolymerization, particularly dual-color photopolymerization, can generally comprise a data processing step (which can also be deemed an inverse data processing step) in which a geometric model of at least one three-dimensional object is directly generated via data processing of one or more images corresponding to a cross-sectional geometry of the three-dimensional object or from a plurality of points or lines corresponding to a cross-sectional geometry of the three-dimensional object. Such a data processing can e.g. comprise a combining the respective images, points, lines corresponding to a cross-sectional geometry of the three-dimensional object to reproduce a geometric model of at least one three-dimensional object via a geometric model reproducing algorithm or a geometric model reproducing software, respectively.

The volumetric printing process is performed on basis of or comprises a number of process parameters. As a non-limiting example, respective process parameters, which can be or comprise irradiation parameters, can particularly, relate to the polymerization of a photocurable resin provided in a working volume, which photocurable resin is locally polymerized to form, via volumetric printing, the at least one three-dimensional object. As another non-limiting example, respective process parameters can relate to motions of moveable devices of a volumetric printing device used for carrying out step a) of the method, e.g. motions of a container delimiting a respective working volume relative to an irradiation device which is configured to emit light of at least one wavelength into the respective working volume, or vice versa. Generally, one, more, or all process parameters of the volumetric printing process can lead to undesired deformation effects, e.g. bending effects, warping effects, etc., of a three-dimensional object which is to be printed or manufactured, respectively.

Generally, the light used for irradiating the photocurable resin in the at least one irradiation process can have a wavelength ranging between 350 nm and 500 nm, particularly between 375 nm and 475 nm, more particularly between 375 nm and 455 nm, more particularly between 395 nm and 425 nm.

In exemplary embodiments of the method, the volumetric printing process of step a) can comprise at least one irradiation process which can comprise irradiating, typically on basis of a plurality of irradiation parameters, a photocurable resin with light of a first wavelength and light of a second wavelength, which is different from the first wavelength, to form, by multi-color photopolymerization, particularly by dual-color photopolymerization, a three-dimensional object in at least one direction. The at least one direction can be or comprise a formation direction of the respective three-dimensional object to be printed, i. e. the or a direction in which the respective three-dimensional object is printed. The method generally, enables volumetric printing of one or more three-dimensional objects in the at least one (formation) direction.

In such exemplary embodiments of the method in which the at least one irradiation process comprises irradiating the photocurable resin with light of a first wavelength and light of a second wavelength, which is different from the first wavelength, the following can apply: The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a concrete example, the first wavelength can be ca. 375 nm. Typically, the first wavelength will be chosen at least under consideration of the photochemical properties, particularly the photochromic properties, of the photoinitiator molecules of at least one photoinitiator of the photocurable resin. The light of the second wavelength can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. As an example, the second wavelength can be ca. 475 nm. Preferably, the light of the second wavelength can comprise a wavelength in a range which does not include the first wavelength. Typically, the second wavelength will be chosen at least under consideration of the photochemical properties, particularly the photochromic properties, of the photoinitiator molecules of at least one photoinitiator of the photocurable resin.

The photocurable resin can be irradiated with the light of the first wavelength and the light of the second wavelength such that the light of the first wavelength and the light of the second wavelength intersect in the or a formation zone. The formation zone can generally be deemed the zone in which the photopolymerization of the photocurable resin takes place which results in polymerization-based photocuring and/or solidification, respectively of the photocurable resin and forming at least a cross-section of the three-dimensional object to be printed. Particularly, the light of the first wavelength can be irradiated into the working volume and photocurable resin, respectively at a different angle and/or in a different direction relative to the light of the second wavelength. As an example, the light of the first wavelength can be irradiated into the photocurable resin at an angle of ca. 90° relative to the light of the second wavelength.

The light of the first wavelength can comprise a light sheet which can comprise a plurality of light beams extending through the working volume and photocurable resin, respectively. Respective light beams can comprise two or more (substantially) parallel light beams. Respective light beams can comprise a light plane, for instance. A light plane can be or comprise a light plane in which the or a plurality of light beams, such as e.g. (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing device used for implementing the method, for example.

A respective light sheet or light beam can comprise a main extension which can be generally understood as the extension direction of the respective individual light sheet or light beam between opposing walls or wall portions of a container delimiting a working volume. Particularly, the main extension direction of each respective light sheet or light beam can be understood as the main propagation direction of the light of the light sheet or light beam between opposing walls or wall portions of a container delimiting the working volume. Hence, the main extension direction of a respective light sheet or light beam can correspond to a direction along a line which substantially halves the divergence or divergence angle, respectively of the light sheet or light beam within the working volume or photocurable resin, respectively.

The height direction or height extension of a respective light sheet or light beam can be generally understood as the direction with maximum spatial extension which extends orthogonal to the main extension direction. Particularly, the height direction or height extension can be a direction or extension parallel to a wall or wall portion of a container delimiting the working volume through which wall or wall portion, respectively the light sheet or light beam enters the working volume.

The light of the second wavelength can comprise a projection of images corresponding to a cross-sectional geometry of a three-dimensional object to be printed or a plurality of points or lines corresponding to a cross-sectional geometry of the three-dimensional object to be printed. Respective points or lines can form a pattern, such as e.g. a hatch pattern. A respective projection can be generated by a light projection device, such as e.g. a digital light projection device, which can form part of an irradiation device of a volumetric printing device used for implementing the method. A respective point or line can be generated by a directed light emission device, such as e.g. a laser device, which can form part of an irradiation device of a volumetric printing device used for implementing the method, for instance.

The at least one irradiation process can comprise irradiating the photocurable resin with light from at least two different (spatial) directions, particularly such that one or more volume elements of the photocurable resin are irradiated with light from at least two different angles. Hence, the at least one irradiation process can comprise that the photocurable resin is irradiated from a first direction and at least one second direction, which is different from the first direction. The first direction can be or comprise a direction transverse to a formation direction of the or a three-dimensional object to be printed and the second direction can be a direction parallel to the formation direction of the or a three-dimensional object to be printed. As such, a respective first direction can be related with a respective first angle and a respective second direction can be related with a respective second angle which can be 90° relative to the first angle, for instance. In either case, the light from a respective first direction can intersect with the light of a respective second direction in the or a formation zone. As mentioned above, the formation zone is typically the zone in which the photopolymerization of the photocurable resin takes place which results in photocuring and/or solidification, respectively of the photocurable resin and forming at least a cross-section of the at least one three-dimensional object to be printed.

At least one of: the photocurable resin, an irradiation device emitting the light of the at least one wavelength, and a formation zone within the photocurable resin, which is irradiated with the light of the at least one wavelength during the at least one irradiation process, can be moved during the at least one irradiation process. A respective motion of at least one of: the photocurable resin, the irradiation device emitting the light of the at least one wavelength, or the formation zone within the photocurable resin, which is irradiated with the light of the at least one wavelength, can enable a highly efficient printing process and high printing speeds, respectively. As such, the method can particularly, comprise that the or a formation zone can be moved along at least one direction, particularly relative to a respective container (as indicated above) comprising the photocurable resin. The at least one direction can comprise the or a formation direction of the three-dimensional object to be printed. Motion of the at least one formation zone can e.g. be relative to at least one functional component of a volumetric printing device used for implementing the method, for instance. A respective functional component of a respective volumetric printing device can be a respective container or an irradiation device, for instance. As such, during the at least one irradiation process, the at least one formation zone can be actively moved, e.g. due to a coupling with a drive device, such as e.g. a motor, along the at least one direction, particularly the formation direction, e.g. at a nominal motion rate, through at least one part of the container volume, while the container is stationary. Alternatively, during the at least one irradiation process, the container can be actively moved, e.g. due to a coupling with a drive device, such as e.g. a motor, along the at least one direction, particularly the formation direction, while the at least one formation zone is stationary. Further alternatively, both the at least one formation zone and the container can be actively moved, e.g. due to a coupling with a drive device, such as e.g. a motor, wherein the at least one formation zone and the container can be moved in the same direction or in opposite directions. Also, the nominal motion rate and/or motion direction at which the at least one formation zone and/or the container is moved along the at least one direction, particularly relative to the container, can be varied. Additionally or alternatively, the or a second irradiation device of a dual-color irradiation device can be actively moved along the at least one direction, particularly the formation direction, while at least one of the container or the at least one formation zone is actively moved or not actively moved. Actively moving the or a second irradiation device of a dual-color irradiation device can be a means to implement a focus correction of the light of the second wavelength, for instance. As such, also embodiments are contemplated in which each of the or a second irradiation device of a dual-color irradiation device, the at least one formation zone and the container are actively moved before, during or after the at least one irradiation process. Respective active motions can be controlled by the or a controller of a device used for implementing the volumetric printing process, for instance.

Respective process parameters on basis of which a respective volumetric printing process is implemented can generally be or comprise parameters of the at least one irradiation process which can influence the spatial and/or temporal irradiation of the photocurable resin with the light of the first and/or the second wavelength and thus, the spatial and/or temporal polymerization of the photocurable resin within the working volume. Respective process parameters can additionally or alternatively be or comprise the number of irradiation steps in which one or more volume elements, e.g. voxels, of the photocurable resin are irradiated with the light of the first and/or the second wavelength. As such, respective printing parameters can be or comprise control parameters of a volumetric printing device for implementing the method which control parameters can concern the spatial and/or temporal irradiation of the photocurable resin with the light of the first and/or the second wavelength to form, particularly by multi-color photopolymerization, more particularly by dual-color photopolymerization, at least one three-dimensional object in at least one direction. Particularly, respective process parameters can be or comprise control parameters of an irradiation device of a respective volumetric printing device which irradiation device is configured to irradiate a photocurable resin with light of a respective first and second wavelength to form, by multi-color photopolymerization, particularly by dual-color photopolymerization, at least one three-dimensional object in at least one direction. Respective process parameters can also be or comprise control parameters of a drive device of a respective volumetric printing device which drive device is configured to move the photocurable resin or a container containing the photocurable resin in the at least one direction, for instance.

In an exemplary embodiment of the method, the volumetric printing process can implement the principles of a volumetric printing method which is known as xolography. The base principles of xolography are specified in WO 2020/245456 A1, the contents of which are incorporated herein by reference.

The method comprises in a second step (step b)), a step of determining at least one property of the at least one three-dimensional object which has been printed in step a) and generating a determination information indicative of the at least one determined property of the at least one three-dimensional object. Step b) is thus, typically implemented with a determination device, which can comprise one or more determination elements, such as e.g. sensors, configured to determine at least one property of the at least one three-dimensional object which has been printed in step a) and generating a determination information indicative of the at least one determined property of the at least one three-dimensional object. A respective determination information can comprise raw data (which is or can be further processed by a controller), for instance. In either case, a respective determination information can, directly or indirectly, indicate at least one (determined) property of the at least one three-dimensional object which has been printed in the volumetric printing process of step a).

Generally, respective properties of a respective three-dimensional object which can be determined in step b) can comprise at least one chemical property and/or at least one physical property of the respective three-dimensional object. Non-limiting examples of respective chemical properties and/or physical properties will be provided further below.

The method comprises in a third step (step c)), a step of comparing the at least one determined property of the at least one three-dimensional object with at least one reference property, particularly a predefinable or predefined nominal property or a predefinable or predefined target property, of a reference three-dimensional object, particularly a predefinable or predefined nominal three-dimensional object or a predefinable or predefined target three-dimensional object, and generating a comparison information indicative of the comparison result. Notably, a reference three-dimensional object can be a real three-dimensional reference object or a digital representation of a three-dimensional reference object, such as e.g. a model of a three-dimensional reference object, particularly a CAD-model or STL-model, of a three-dimensional object to be manufactured. Step c) is thus, typically implemented with a comparison device, which can be or comprise a hardware- and/or software-embodied device and thus, generally a computer-implemented comparison device, which is configured to compare the at least one determined property of the at least one three-dimensional object with at least one reference property and generate a comparison information indicative of the comparison result. The comparison device can comprise or can communicate with a data storage device, which can e.g. be or comprise a data server, in which one or more reference properties, e.g. respective predefinable or predefined nominal or target properties of one or more predefinable or predefined nominal or target three-dimensional objects, are stored. The comparison device can comprise one or more algorithms adapted for comparing the at least one determined property of the at least one three-dimensional object with at least one respective reference property and generating a comparison information indicative of the comparison result.

Notably, a respective reference property, e.g. a respective predefinable or predefined nominal or target property, can be, particularly with respect to an intended application and/or function of the at least one three-dimensional object to be manufactured, a desired or required property of the at least one three-dimensional object to be manufactured. Also, a respective reference three-dimensional object, e.g. a respective predefinable or predefined nominal or target three-dimensional object can be, particularly with respect to an intended application and/or function of the at least one three-dimensional object to be manufactured, a desired or required three-dimensional object. As such, a respective predefinable or predefined nominal or target property can correspond to a desired or required property of the at least one three-dimensional object to be manufactured and a predefinable or predefined nominal or target three-dimensional object can correspond to a desired or required three-dimensional object to be manufactured.

The method comprises in a fourth step (step d)), a step of determining if the comparison result indicates that a deviation, if any, between the determined at least one property of the at least one three-dimensional object and the at least one reference property exceeds at least one threshold value. Step d) can also be implemented with the or a respective comparison device which can comprise or can communicate with a data storage device, which can be or comprise a data server, in which respective thresholds values are stored. The comparison device can comprise one or more algorithms adapted for determining if the comparison result indicates that a deviation, if any, between the determined at least one property of the at least one three-dimensional object and the at least one reference property exceeds the at least one threshold value.

As an example, a deviation between a determined property and a related predefinable or predefined nominal or target property of at least 0.1 %, particularly at least 1 %, more particularly at least 5 %, more particularly at least 10 %, more particularly at least 15 %, more particularly at least 20 %, can be deemed a respective deviation which triggers changing at least one of: at least one parameter of the geometric model of the three-dimensional object to be manufactured, at least one process parameter of the volumetric printing process, at least one process parameter of a post-processing process. Yet, respective threshold values will typically, depend at least on a concrete property and a concrete three-dimensional object and thus, will typically, need to be individually set, e.g. based on experimental results, computer-implemented simulations, etc. for each concrete property and each concrete three-dimensional object or at least type of concrete individual object.

If the comparison result indicates that a deviation between the determined at least one property of the at least one three-dimensional object and the at least one reference property exceeds the at least one threshold value, the method can comprise changing at least one of: at least one parameter of the geometric model of the at least one three-dimensional object to be manufactured, at least one process parameter of the volumetric printing process, at least one process parameter of a post-processing process. As such, the method enables and comprises determining deviations between one or more determined properties of the at least one three-dimensional object printed in step a) and respective one or more reference properties, e.g. predefinable or predefined nominal or target properties. If these deviations are deemed significant, which is the case in which the deviations exceed at least one respective threshold value, the method enables and comprises active and deliberate changes of at least one of: at least one parameter of the geometric model of the at least one three-dimensional object to be manufactured, at least one process parameter of the volumetric printing process, at least one process parameter of a post-processing process, to at least partially reduce or even completely compensate the determined deviations e.g. in one or more upcoming volumetric printing processes. As such, the step of changing at least one of: at least one parameter of the geometric model of the at least one three-dimensional object to be manufactured, at least one process parameter of the volumetric printing process, at least one process parameter of a post-processing process aims at a reduction or full compensation of the determined deviation. The step of changing at least one of: at least one parameter of the geometric model of the at least one three-dimensional object to be manufactured, at least one process parameter of the volumetric printing process, at least one process parameter of a post-processing process, thus, particularly comprises changes of at least one of: at least one parameter of the geometric model of the at least one three-dimensional object to be manufactured, at least one process parameter of the volumetric printing process, at least one process parameter of a post-processing process, which enable a reduction or complete compensation of the determined deviation when repeating one, more, or all the steps of the method.

As such, the step of changing at least one of: at least one parameter of the geometric model of the at least one three-dimensional object to be manufactured, at least one process parameter of the volumetric printing process, at least one process parameter of a post-processing process, can comprise carrying out actions which have been taken in connection with previous volumetric printing processes and/or post-processing processes with which one or more specific properties of a three-dimensional object have been successfully changed by deliberately changing at least one of: at least one parameter of the geometric model of the at least one three-dimensional object to be manufactured, at least one process parameter of the volumetric printing process, at least one process parameter of a post-processing process. As an example, one or more process parameters of a current or an upcoming volumetric printing process can be changed, e.g. by changing one or more irradiation parameters, which had a positive effect on one or more properties of an as-printed three-dimensional object in a previous volumetric printing process. As a more concrete example, previous experimental results, simulations, etc., may have shown that irradiation parameters which relate to the polymerization of a specific photocurable resin, such as e.g. irradiation intensity, irradiation time, irradiation speed, etc., can reduce undesired deformation effects, e.g. caused by bending, warpage, etc., of an as-printed three-dimensional object such that changing such respective irradiation parameters, e.g. by increasing or decreasing one or more of such parameters, can lead to a reduction of undesired deformation effects of at least one three-dimensional object.

Analogous approaches apply to other process parameters of the volumetric printing process. Further, analogous approaches apply to changes of at least one of: at least one parameter of the geometric model of the three-dimensional object to be manufactured and at least one process parameter of a post-processing process, e.g. a parameter that relates to the post-curing of a three-dimensional object, such as e.g. post-curing intensity, post-curing time, post-curing speed, etc., for instance.

If the comparison result indicates that a deviation between the determined at least one property of the at least one three-dimensional object and the at least one reference property exceeds the at least one threshold value, the method cannot only comprise changing at least one of: at least one parameter of the geometric model of the at least one three-dimensional object to be manufactured, at least one process parameter of the volumetric printing process, at least one process parameter of a post-processing process, but also repeating steps a) - d) with the at least one changed parameter of the geometric model of the at least one three-dimensional object to be manufactured and/or with the at least one changed process parameter of the volumetric printing process and/or with the least one changed process parameter of the post-processing process until the comparison result indicates, for at least one further three-dimensional object, that the deviation between the at least one determined property of the at least one further three-dimensional object and the at least one reference property does not exceed the threshold value.

As such, the method can comprise a fifth step (step e)) which comprises, if the comparison result indicates that a deviation between the determined at least one property of the at least one three-dimensional object and the at least one reference property exceeds the at least one threshold value, changing at least one of: at least one parameter of the geometric model of the at least one three-dimensional object to be manufactured, at least one process parameter of the volumetric printing process, at least one process parameter of a post-processing process, and repeating steps a) - d) one or multiple times with the respective changed at least one parameter of the geometric model of the at least one three-dimensional object and/or with the respective changed parameter of the at least one process parameter of the volumetric printing process and/or with the respective changed process parameter of the post-processing process until the comparison result indicates that the deviation between the determined at least one property of the or a further three-dimensional object and the at least one reference property does no longer exceed the at least one threshold value.

The above steps of the method enable an improved manufacturing of three-dimensional objects via volumetric printing as they comprise at least in steps b) and c) an inherent control of one or more properties of a current three-dimensional object which has been manufactured in step a) with regard to one or more desired or required predefinable or predefined nominal or target properties. Further, the method comprises in step e) an active step of changing at least one of: at least one parameter of the geometric model of the at least one three-dimensional object to be manufactured, at least one process parameter of the volumetric printing process, at least one process parameter of a post-processing process, and printing at least one further three-dimensional object on basis of the respective changed parameters; the further three-dimensional object will typically, comprise improved properties, particularly less undesired deformations, relative to the current (or a previous) three-dimensional object. Thus, an optimization process, particularly an iterative optimization process, of manufacturing three-dimensional objects via volumetric printing can be implemented in one or multiple stages, wherein each stage typically, comprises performing steps a) - e) in the above-specified manner.

Notably, one, more or all steps of the method can be, e.g. via a controller of a system for implementing the method (such as the system of the second aspect of the invention), implemented at least semi-automatically, particularly fully automatically. Particularly, each change of at least one: at least one parameter of the geometric model of the at least one three-dimensional object to be manufactured, at least one process parameter of the volumetric printing process, at least one process parameter of a post-processing process, can be implemented at least semi-automatically, particularly fully automatically. Hence, the method enables an at least semi-automatic, particularly fully automatic, optimization of a manufacturing method of at least one three-dimensional object via volumetric printing.

Further exemplary embodiments of the method will be specified in the following. Notably, each one of these exemplary embodiments can be arbitrarily combined with at least one other one of these exemplary embodiments.

As indicated above, the step of determining the at least one property of the at least one three-dimensional object and generating the determination information indicative of the at least one determined property of the at least one three-dimensional object can comprise determining at least one chemical and/or physical property of the at least one three-dimensional object.

In an exemplary embodiment of the method, the at least one chemical property can be or comprise at least one of: a chemical composition of the at least one three-dimensional object printed in step a), a chemically reactive state of the at least one three-dimensional object printed in step a), particularly a polymerization state of the at least one three-dimensional object printed in step a). Respective chemical properties of the at least one three-dimensional object can be determined via a determination device which can be or comprise at least one of: a spectroscopy device, e.g. via a device for performing spectroscopy, particularly a device for performing UV-vis-, FTIR- or Raman-spectroscopy, or via a device for performing differential scanning calorimetry, for example.

In an exemplary embodiment of the method, the at least one physical property can be or comprise at least one of: an acoustic property, an optical property, a geometric property, a mechanical property, a surface property, an electric property, a thermal property, a magnetic property of the at least one three-dimensional object printed in step a). Respective physical properties of the at least one three-dimensional object can be determined via a determination device which can be or comprise at least one of: an interferometer, impedance meter, an optical sensor, such as e.g. a camera or a one- or multi-dimensional scanner, a microscope, an electrical conductivity or resistance meter, a thermal conductivity or resistance meter, a testing machine, e.g. for performing tests under mechanical loads, such as e.g. bending tests, compressive strength tests, tensile strength tests, flexural strength tests, shear strength tests, torsion tests, hardness tests, a roughness meter (profilometer), a magnetometer, etc. Also, a testing device configured to perform a test of at least one function of the at least one three-dimensional object with respect to an intended application and/or function of the at least one three-dimensional object, e.g. a testing device for testing at least one of: an optical function, a geometric function, a mechanical function, a surface function, an electric function, a thermal function, a magnetic function, etc. of the at least one three-dimensional object with respect to an intended application and/or function of the object, can be used for determining if the at least one three-dimensional object printed in step a) fulfills, with respect to an intended application and/or function of the at least one three-dimensional object, a desired or required function.

In a further exemplary embodiment of the method, the at least one determined property of the at least one three-dimensional object can be indicative of a deformation of the at least one three-dimensional object, particularly caused by bending, warping, etc. of the at least one three-dimensional object, more particularly caused by process-induced bending, warping, etc. of the at least one three-dimensional object during the volumetric printing process and/or the or a post-processing process. Any deformation of the at least one three-dimensional object can lead to at least a deviation of at least one property of the at least one three-dimensional object, such as but not limited to a geometric property, relative to the or a reference property of the or a reference three-dimensional object. As such, the or a respective determination device can comprise one or more algorithms adapted to derive, from a determined property of at least one printed three-dimensional object, e.g. via principles of data correlation, principles of artificial intelligence, machine learning, etc., a related deviation from the or a reference property of the or a reference three-dimensional object. Yet, it is also conceivable that a respective deviation is determined by a, particularly measurement-based, comparison of a determined property of at least one three-dimensional object - hence, any determination of a property of a three-dimensional object mentioned herein can generally also comprise a measurement of the respective property of the three-dimensional object - with a related reference property of the or a reference three-dimensional object.

As is apparent from above, the at least one property of the at least one three-dimensional object can also be determined via a measurement device configured to measure at least one chemical and/or physical property of the at least one three-dimensional object. Non-limiting examples of respective measurement devices comprise at least one of the determination devices mentioned further above. Hence, any one of the determination devices mentioned further above can also be or comprise a measurement device and vice versa.

In further exemplary embodiments of the method, changing the at least one parameter of the geometric model of the at least one three-dimensional object to be manufactured can comprise changing information of a CAD-file, particularly a STL-file, concerning or representing the model of the at least one three-dimensional object to be manufactured. As such, revised CAD- or STL-files can be generated within the framework of the method, particularly in step e), wherein each revision of a CAD- or STL-file can aim at and thus, lead to a reduction of undesired deformation effects and can therefore, have a positive effect on the properties, such as e.g. the geometric accuracy, of at least one further printed three-dimensional object. Changing respective information of a CAD- or STL-file concerning or representing the model of the at least one three-dimensional object to be manufactured can particularly, comprise at least one of re-positioning and/or re-orienting of one or more vertices, e.g. to change a vertex density locally or globally. Yet, one or more other image parameters of a respective CAD- or STL-file can be changed accordingly. Generally, at least one image parameter, particularly a pixel, a voxel, or a vertex, of the model of the at least one three-dimensional object to be manufactured can be changed. As such, information of a CAD-file, particularly a STL-file, concerning or representing a model of the at least one three-dimensional object to be manufactured can be or comprise a pixel, a voxel, a vector, or a vertex, of the model of the at least one three-dimensional object to be manufactured, for example. Experiments have surprisingly shown that respective changes of image parameters, e.g. by re-positioning and/or re-orienting of one or more pixels, voxels, vectors or vertices, can have, with respect to reducing undesired deformation effects of/for one or more further printed three-dimensional objects, a positive effect on the geometric accuracy of the printed three-dimensional objects.

As indicated above, data comprising information of a geometric model of the at least one three-dimensional object to be manufactured and thus, a respective geometric model of the at least one three-dimensional object, such as e.g. a CAD-file or -model or an STL-file or -model, to be manufactured can be further processed, via suitable data processing means, such as e.g. algorithms, software, etc., to generate projections or images, respectively of one or more cross-sectional geometries of the at least one three-dimensional object to be manufactured. As further indicated above, a respective projection of images or respective images can then be, in the course of the volumetric printing process of step a) radiated from one or more directions towards the working volume to effect polymerization of a photocurable resin provided in a working volume, which photocurable resin is locally polymerized to form, via volumetric printing, the at least one three-dimensional object.

The inventors have unexpectedly found that it can be beneficial to directly change at least one parameter of the geometric model of the at least one three-dimensional object to be manufactured rather than processing projections or images, respectively of one or more cross-sectional geometries of the at least one three-dimensional object to be manufactured which have been obtained from a respective model of the at least one three-dimensional object to be manufactured for several reasons. As an example, directly change at least one parameter of the geometric model of the at least one three-dimensional object to be manufactured can be beneficial with respect to the accuracy of the change of the at least one parameter as the original data and no data resulting from further processing the original data, such as a respective projection of images or respective images can be changed. As another example, the computational resources required for changing at least one parameter of the geometric model of the at least one three-dimensional object to be manufactured can be lower compared to a further processing of respective projection of images or respective images. In such a manner, also the efficiency of changing at least one parameter of the geometric model of the at least one three-dimensional object to be manufactured can be increased, e.g. because lesser and/or even less complex computational steps can be required when directly changing at least one parameter of the geometric model of the at least one three-dimensional object to be manufactured.

This particularly, applies as the method, specifically when it comprises multi-color photopolymerization, particularly dual-color photopolymerization, can comprise, as indicated above, a data processing step in which images corresponding to a cross-sectional geometry of a three-dimensional object or a plurality of points or lines corresponding to a cross-sectional geometry of the three-dimensional object can be directly generated via data processing of a geometric model of the at least one three-dimensional object and, additionally or alternatively, a data processing step (which can also be deemed an inverse data processing step) in which a geometric model of at least one three-dimensional object can be directly generated via data processing of one or more images corresponding to a cross-sectional geometry of the three-dimensional object or from a plurality of points or lines corresponding to a cross-sectional geometry of the three-dimensional object.

As indicated above, a respective first data processing can e.g. comprise slicing the geometric model of the at least one three-dimensional object into a plurality of slices of defined geometry, particularly defined thickness, via a slicing algorithm or a slicing software, respectively, and a respective second data processing can e.g. comprise a combining the respective images, points, lines corresponding to a cross-sectional geometry of the three-dimensional object to reproduce a geometric model of at least one three-dimensional object via a geometric model reproducing algorithm or a geometric model reproducing software, respectively. Each of the first and second data processing steps can be implemented highly efficient e.g. because, respective slices can be directly obtained from the geometric model of the three-dimensional object to be manufactured in the first data processing step and a respective geometric model of the three-dimensional object can be directly obtained from respective slices of the three-dimensional object, respectively. These two data processing steps can also enable that any modifications of a geometric model of a three-dimensional object, such as e.g. a CAD-file or - model or a STL-file or -model, can be efficiently modified in a comparatively low number of steps, particularly when compared to volumetric printing processes which comprise computed axial lithography (CAL) or similar volumetric printing processes.

Specifically, this applies as the method, when it comprises multi-color photopolymerization, particularly dual-color photopolymerization, can comprise, as indicated above, a direct data processing step in which images corresponding to a cross-sectional geometry of a three-dimensional object or a plurality of points or lines corresponding to a cross-sectional geometry of the three-dimensional object can be directly generated via data processing of a geometric model of the at least one three-dimensional object, particularly slicing of the geometric model, where the directly generated images, particularly after further data processing, e.g. using one or more grayscale algorithms, preferably without substantially changing the shape of the contour of the images or the respective cross-sectional geometry of the object specified by the images, can be used for the manufacture of the at least one three-dimensional object. This direct data processing step can also enable that any geometrical model of a three-dimensional object, such as e.g. a CAD-file or -model or a STL-file or -model, can be efficiently modified in a comparatively low number of steps to obtain a new target geometrical model of the three-dimensional model, particularly when compared to volumetric printing processes which comprise an iterative or indirect data processing step approach, where the images for the manufacture of the at least one three-dimensional object are obtained by iteratively repeating the steps of a) processing images to generate a superimposed geometrical model; b) comparing the superimposed geometrical model with the target geometrical model; c) changing the images; until the superimposed geometrical model and the target geometrical model are the substantially the same, particularly where the volumetric printing process comprises computed axial lithography (CAL) or similar volumetric printing processes.

Notably, changing information of a CAD-file, particularly a STL-file, concerning or representing a model of the at least one three-dimensional object to be manufactured can be implemented at least semi-automatically, particularly fully automatically, on basis of algorithms adapted to change information of a CAD-file, particularly a STL-file, concerning or representing the model of the three-dimensional object to be manufactured with respect to at least one target criterion. A respective target criterion can be or comprise one or more target properties of the three-dimensional object to be printed. Respective target properties can comprise chemical and/or physical properties of the at least one three-dimensional object to be printed. As indicated above, chemical properties can comprise at least one of: a chemical composition of the at least one three-dimensional object printed in step a), a chemically reactive state of the at least one three-dimensional object printed in step a), particularly a polymerization state of the at least one three-dimensional object printed in step a). As further indicated above, physical properties can comprise at least one of: an acoustic property, an optical property, a geometric property, a mechanical property, a surface property, an electric property, a thermal property, a magnetic property of the at least one three-dimensional object printed in step a). As a non-limiting example, a respective algorithm can be or comprise principles of linear regression for reducing undesired deformation effects and thus, particularly iteratively, enhance the properties of the at least one three-dimensional object to be printed, particularly the fidelity of the at least one three-dimensional object to be printed. However, other computational models as well as principles of artificial intelligence, machine learning, etc. are contemplated.

In further exemplary embodiments of the method, changing the at least one process parameter of the volumetric printing process can comprise changing at least one parameter of the irradiation process of the volumetric printing process, which irradiation process comprises, as indicated above, irradiating a photocurable resin within a working volume with light of at least one wavelength. A respective process parameter can be or comprise at least one of: the duration of irradiating the photocurable resin with light of at least one wavelength, a starting time of irradiating the photocurable resin with light of at least one wavelength, an end time of irradiating the photocurable resin with light of at least one wavelength, an intensity of the light used for irradiating the photocurable resin, a wavelength of the light used for irradiating the photocurable resin, a printing speed, a motion path along which the working volume is moved during the irradiation process, a printing direction, an orientation of the three-dimensional object, particularly a main axis or symmetric axis of the three-dimensional object, within the working volume, etc. Experimental results have shown that changing of at least one of the aforementioned parameters of the irradiation process can surprisingly lead to significantly reduced deformation effects of/for one or more further printed three-dimensional objects and can thus, particularly iteratively, enhance the properties of the at least one three-dimensional object to be printed, particularly the fidelity of the three-dimensional object to be printed.

As an example, it was surprisingly observed that changes of the orientation of the three-dimensional object, particularly a main axis or symmetric axis of the three-dimensional object, within the working volume can reduce undesired deformation effects. This is believed to be based on minimizing the irradiation area which is irradiated with the light of the second wavelength in each position of a respective light sheet.

In further exemplary embodiments of the method, changing the at least one process parameter of the volumetric printing process can comprise changing at least one parameter of the photocurable resin used for volumetric printing the three-dimensional object. Again, a respective parameter of the photocurable resin can be or comprise a chemical parameter of the photocurable resin, such as e.g. the chemical composition of the photocurable resin, e.g. the concentration and/or type of photoinitiators of the photocurable resin, and/or a physical parameter of the photocurable resin, such as e.g. the density, the temperature, the absorption and/or transmission with respect to light of at least one wavelength, the viscosity of the photocurable resin, etc. Experimental results have shown that changing of at least one of the aforementioned parameters of the photocurable resin can surprisingly lead to significantly reduced deformation effects of/for one or more further printed three-dimensional objects and can thus, particularly iteratively, enhance the properties of the at least one three-dimensional object to be printed, particularly the fidelity of the at least one three-dimensional object to be printed.

In further exemplary embodiments of the method, at least one parameter of handling the at least one three-dimensional object via a handling device, such as e.g. a handling robot, e.g. for transferring it from a volumetric printing device to a post-processing device, etc. can be changed. A respective parameter of handling at least one the three-dimensional object can be or comprise changing at least one of: a gripping site of the at least one three-dimensional object at which the at least one three-dimensional object is gripped, e.g. via a gripping device, for handling it, a handling path along which the at least one three-dimensional object is handled, a handling speed (and related forces exerted on the at least one three-dimensional object during handling), etc. Experimental results have shown that changing of at least one of the aforementioned handling parameters can surprisingly lead to significantly reduced deformation effects of/for one or more further printed three-dimensional objects and can thus, particularly iteratively, enhance the properties of the at least one three-dimensional object to be printed, particularly the fidelity of the at least one three-dimensional object to be printed.

In further exemplary embodiments of the method, changing the at least one process parameter of the post-processing process, which can generally be or comprise a post-curing process, can comprise changing at least one of: the duration of the post-processing process, a starting time of the post-processing process, an end time of the post-processing process, an energy, intensity, or wavelength of the post-processing process, particularly an energy, intensity or wavelength of radiation applied to the at least one three-dimensional object during the post-processing process, the temperature or temperature profile of the post-processing process, the speed of the post-processing process, at least one parameter, such as e.g. a chemical parameter, such as e.g. chemical composition, concentration, etc., a physical parameter, a streaming parameter, a concentration parameter, of at least one process gas, such as e.g. an inert gas, of the post-processing process, etc. A respective temperature or temperature profile can particularly, be changed in connection with a sintering process which is an example of a respective post-processing process. Respective temperature profiles can comprise at least one of: a positive temperature ramp (heating ramp), a negative temperature ramp (cooling ramp), a temperature plateau. Respective positive or negative ramps can be linear or non-linear ramps, for example.

Experimental results have shown that changing of at least one of the aforementioned parameters of a post-processing process can surprisingly lead to significantly reduced deformation effects of/for one or more further printed three-dimensional objects and can thus, enhance the properties of the at least one three-dimensional object to be printed, particularly the fidelity of the at least one three-dimensional object to be printed.

In further exemplary embodiments of the method, at least step c) can be performed via a controller, particularly via at least one algorithm of a controller, which is configured to compare the at least one determined property of the three-dimensional object with at least one reference property, particularly a target property, of a reference three-dimensional object, particularly a target three-dimensional object, and generating a comparison information indicative of the comparison result. Likewise, step d) and e), at least with respect to the determination if the threshold value is exceeded or not, can be performed via the or a controller, particularly via at least one algorithm of a controller, which is configured to determine if the comparison result indicates that a deviation between the determined at least one property of the three-dimensional object and the at least one reference property of the reference three-dimensional object exceeds a threshold value; and, if the comparison result indicates that a deviation between the determined at least one property of the three-dimensional object and the at least one reference property of the reference three-dimensional object exceeds the threshold value, control the change of at least one of: at least one parameter of the geometric model of the three-dimensional object to be manufactured, at least one process parameter of the volumetric printing process, at least one process parameter of a post-processing process.

Particularly, a respective controller can comprise one or more algorithms adapted to change at least one of: at least one parameter of the geometric model of the at least one three-dimensional object to be manufactured, at least one process parameter of the volumetric printing process, at least one process parameter of a post-processing process, with respect to at least one target criterion. A respective target criterion can be or comprise one or more target properties of the at least one three-dimensional object to be printed. Respective target properties can comprise chemical and/or physical properties of the three-dimensional object to be printed. As indicated above, chemical properties can comprise at least one of: a chemical composition of the at least one three-dimensional object printed in step a), a chemically reactive state of the at least one three-dimensional object printed in step a), particularly a polymerization state of the at least one three-dimensional object printed in step a). As further indicated above, physical properties can comprise at least one of: an acoustic property, an optical property, a geometric property, a mechanical property, a surface property, an electric property, a thermal property, a magnetic property of the at least one three-dimensional object printed in step a).

As indicated above, the at least one irradiation process of the volumetric printing process can comprise irradiating a photocurable resin with light of at least a first wavelength and a second wavelength, different from the first wavelength, to form, by multi-color photopolymerization, particularly by dual-color photopolymerization, the three-dimensional object. Concrete examples of respective first and second wavelengths are provided further above. The at least one irradiation process can thus, comprise multi-color photopolymerization, particularly dual-color photopolymerization, of a photocurable resin which provides several benefits for manufacturing three-dimensional objects, such as e.g. faster manufacturing, higher design complexity, and higher resolution.

Irradiating the photocurable resin with the light of the first wavelength can cause one or more photoinitiator molecules of the photocurable resin to transfer from an initial state into an intermediate state with changed optical properties compared to the initial state, such that the photoinitiator molecules of the one or more photoinitiators in the intermediate state can absorb the light of the second wavelength which results in that the photoinitiator molecules of the one or more photoinitiators are transferred from the intermediate state to a reactive state by absorption of light of the second wavelength which locally triggers the polymerization of the photocurable resin to form the at least one three-dimensional object.

The photocurable resin can be or comprise a photocurable monomer resin or a photocurable oligomer resin, which may e.g. include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically effected by irradiating the photocurable resin with the light of the first wavelength and, particularly simultaneously, the light of the second wavelength, which is different from the first wavelength, which results in that photoinitiator molecules of the one or more photoinitiators of the photocurable resin are converted, e.g., due to the absorption of the light of the first wavelength, from an initial state in which the molecules of the one or more photoinitiators (substantially) do not absorb the light of the second wavelength, into an intermediate state with changed optical properties compared to the initial state, such that the photoinitiator molecules of the one or more photoinitiators in the intermediate state absorb the light of the second wavelength which results in that the molecules of the one or more photoinitiators are transferred from the intermediate state to a reactive state which locally triggers the polymerization of the photocurable resin to form at least one three-dimensional object.

A back reaction of the photoinitiator molecules of the one or more photoinitiators from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Exemplary suitable photocurable resins and exemplary suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

In further exemplary embodiments of the method, changing at least one process parameter of the volumetric printing process can comprise spatially and/or temporally varying at least one printing parameter, particularly at least one printing parameter influencing the curing or the curing behavior of the photocurable resin, during the at least one irradiation process. The at least one irradiation process can thus, be concertedly and deliberately spatially and/or temporally controlled which can comprise a concertedly and deliberately controlled variation of at least one printing parameter, particularly of at least one printing parameter influencing the curing behavior of the photocurable resin, during the at least one irradiation process. A respective spatial and/or temporal variation of at least one printing parameter can also comprise a variation of the focus of the light of the first wavelength and/or a variation of the size of one or more images or one or more image elements, such as e.g. pixels, of the light of the second wavelength. A respective spatial and/or temporal variation of at least one printing parameter can also concern the number of irradiation steps in which one or more volume elements, e.g. voxels, of the photocurable resin are irradiated with the light of the or a respective first wavelength and/or light of the or a respective second wavelength. As such, a respective spatial and/or temporal variation of at least one printing parameter can also comprise a variation of the number of irradiation steps in which one or more volume elements, e.g. voxels, of the photocurable resin are irradiated. A respective spatial and/or temporal variation of at least one printing parameter can also concern the motion direction and/or motion rate of the photocurable resin, particularly relative to a light sheet formed of the light of the first wavelength. As such, a respective spatial and/or temporal variation of at least one printing parameter can also comprise a variation of the motion direction and/or motion rate of the photocurable resin, particularly relative to a light sheet formed of the light of the first wavelength.

Based on the spatial and/or temporal variation of at least one printing parameter, the at least one irradiation process can thus, comprise that at least one first portion of the three-dimensional object to be printed (first object portion) is printed with at least one different printing parameter relative to at least one further portion of the three-dimensional object to be printed (further object portion). A respective first object portion can comprise one or more first volume elements, e.g. voxels, of the photocurable resin which are located at one or more first positions within the photocurable resin. A respective further object portion can comprise one or more further volume elements, e.g. voxels, of the photocurable resin which are located at one or more further positions within the photocurable resin. Respective further volume elements can be volume elements which are located behind respective first volume elements in the formation direction.

The spatial and/or temporal variation of at least one printing parameter can enable that each volume element of the photocurable resin can be irradiated with individual printing parameters, particularly printing parameters which influence e.g. the amount of energy, energy density, energy intensity, etc. the respective volume element is exposed to during the at least one irradiation process.

The printing parameters for a respective volume element of the photocurable resin can be chosen under consideration of the position of the respective volume element within the photocurable resin and within the three-dimensional object to be printed, respectively. As an example, one or more volume elements of the photocurable resin which are located adjacent or in proximity to uncured or not to be cured photocurable resin can be irradiated with different printing parameters than one or more volume elements of the photocurable resin which are adjacent or in proximity to cured or to be cured photocurable resin. In such a manner, the spatial and/or temporal variation of at least one printing parameter can particularly be implemented to consider the so-called proximity-effect which causes that a volume element in proximity to another volume element which has already been cured exhibits a specific curing behavior, e.g. an easier or faster curing, which is different from the curing behavior of a volume element which is not in proximity to another volume element which has already been cured or photopolymerized, respectively. Notably, the proximity-effect oftentimes causes undesired structural anisotropy and related undesired lower shrinkage and deformation, respectively of three-dimensional objects in conventional volumetric printing methods.

As such, the method can, in accordance with respective embodiments, enable, based on the spatial and/or temporal variation of at least one printing parameter during the at least one irradiation process, printing three-dimensional objects with higher structural isotropy and lower undesired shrinkage and deformation, respectively such that the resulting three-dimensional objects show high(er) geometrical accuracy and structural fidelity, respectively.

According to another exemplary embodiment, spatially and/or temporally varying the at least one printing parameter, particularly a printing parameter influencing the curing (behavior) of the photocurable resin, can comprise that the photocurable resin is irradiated with the light of the or a first wavelength before it is irradiated with the light of the or a second wavelength. Hence, a variation of at least one printing parameter can comprise that the photocurable resin is spatially and/or temporally irradiated with the light of the or a first wavelength before it is irradiated with the light of the or a second wavelength. As such, one or more volume elements of the three-dimensional object to be printed can be irradiated with the light of the first wavelength before these volume elements are irradiated with the light of the second wavelength. Respective one or more volume elements of the photocurable resin can particularly, comprise the first volume elements of the three-dimensional object to be printed. In other words, the at least one irradiation process can comprise that one or more volume elements can be (only) irradiated with the light of the first wavelength spatially and/or temporally before subsequent volume elements are irradiated with the light of the first wavelength (and typically also with the light of the second wavelength). Irradiating volume elements of the photocurable resin with the light of the first wavelength only can result in a pre-activation of these volume elements which results in improved curing of these volume elements when they are subsequently irradiated with both the light of the first and the second wavelength and thus, result in improved structural properties of the respective three-dimensional object to be printed.

An example of irradiating the photocurable resin with the light of the first wavelength (spatially) before it is irradiated with the light of the second wavelength can comprise that irradiating the photocurable resin with the light of the first wavelength starts at a first position p1 and that irradiating the photocurable resin with the light of the second wavelength starts at a second position p2, wherein the second position p2 is located behind the first position p1 in the formation direction. The second position is typically a position within a volume of the photocurable resin which forms the respective three-dimensional object to be printed and thus, a position inside the respective three-dimensional object to be printed.

Particularly, the second position can be a position within a volume of the photocurable resin which forms an outer boundary or edge of the respective three-dimensional object to be printed and thus, a position at a surface of the respective three-dimensional object to be printed. As such, the three-dimensional object to be printed can comprise portions which are located behind the second position with respect to the formation direction or the three-dimensional object is formed behind the second position with respect to the formation direction, respectively. Hence, the second position can comprise the first volume element, such as e.g. the first voxel, of the three-dimensional object to be printed with respect to the formation direction. The first position can also be a position within a volume of the photocurable resin which forms the respective three-dimensional object to be printed and thus, a position inside the respective three-dimensional object to be printed. Particularly, the first position is a position within a volume of the photocurable resin which does not form the respective three-dimensional object to be printed and thus, a position outside the respective three-dimensional object to be printed.

Another example of irradiating the photocurable resin with the light of the or a first wavelength (temporally) before it is irradiated with the light of the or a second wavelength can comprise that irradiating the photocurable resin with the light of the first wavelength starts at a first time t1 and that irradiating the photocurable resin with the light of the second wavelength starts at a second time t2, wherein t2 > t1. The second time typically corresponds to a time at which a volume of the photocurable resin which forms the respective three-dimensional object to be printed is irradiated. Particularly, the second time can correspond to a time at which a volume of the photocurable resin which forms an outer boundary or edge of the respective three-dimensional object to be printed and thus, a position at a surface of the respective three-dimensional object to be printed is irradiated. As such, the three-dimensional object to be printed can comprise portions which are to be printed after the second time or the printing of the three-dimensional object is completed after the second time, respectively. Hence, the second time can comprise a time at which the first volume element, such as e.g. the first voxel, of the three-dimensional object to be printed is printed with respect to the formation direction. The first time can also correspond to a time at which a volume of the photocurable resin which forms the respective three-dimensional object to be printed is irradiated. Yet, the first time can also correspond to a time at which a volume of the photocurable resin which does not form the respective three-dimensional object to be printed is irradiated.

According to another exemplary embodiment, spatially and/or temporally varying the at least one printing parameter, particularly a printing parameter influencing the curing (behavior) of the photocurable resin, can comprise that the photocurable resin is irradiated with the light of the first wavelength after it is irradiated with the light of the second wavelength. Hence, the variation of at least one printing parameter can comprise that the photocurable resin is spatially and/or temporally irradiated with the light of the first wavelength after it is irradiated with the light of the second wavelength. As such, one or more volume elements of the three-dimensional object to be printed can be irradiated with the light of the first wavelength after these volume elements have been irradiated with the light of the second wavelength. Respective one or more volume elements of the photocurable resin can particularly, comprise the last volume elements of the three-dimensional object to be printed. In other words, the at least one irradiation process can comprise that one or more volume elements can be (only) irradiated with the light of the first wavelength spatially and/or temporally after previous volume elements have been irradiated with the light of the second wavelength (and typically also the light of the first wavelength). Irradiating volume elements of the photocurable resin with the light of the first wavelength only can result in a post-activation of these volume elements which results in further curing of these volume elements after they have been irradiated with both the light of the first and the second wavelength and thus, result in improved structural properties of the respective three-dimensional object to be printed.

An example of irradiating the photocurable resin with the light of the or a first wavelength (spatially) after it is irradiated with the light of the or a second wavelength can comprise that irradiating the photocurable resin with the light of the second wavelength ends at a third position p3 and that irradiating the photocurable resin with the light of the first wavelength ends at a fourth position p4, wherein the fourth position p4 is behind the third position p3 in the formation direction. The third position is typically a position within a volume of the photocurable resin which forms the respective three-dimensional object to be printed and thus, a position inside the respective three-dimensional object to be printed. Particularly, the third position can be a position within a volume of the photocurable resin which forms an outer boundary or edge of the respective three-dimensional object to be printed and thus, a position at a surface of the respective three-dimensional object to be printed. As such, the three-dimensional object to be printed can comprise portions which are located in front of the third position with respect to the formation direction or the three-dimensional object is formed in front of the third position with respect to the formation direction, respectively. Hence, the third position can comprise the last volume element, such as e.g. the last voxel, of the three-dimensional object to be printed with respect to the formation direction. The fourth position can also be a position within a volume of the photocurable resin which forms the respective three-dimensional object to be printed and thus, a position inside the respective three-dimensional object to be printed. Particularly, the fourth position is a position within a volume of the photocurable resin which does not form the respective three-dimensional object to be printed and thus, a position outside the respective three-dimensional object to be printed.

Another example of irradiating the photocurable resin with the light of the or a first wavelength (temporally) after it is irradiated with the light of the or a second wavelength can comprise that irradiating the photocurable resin with the light of the second wavelength ends at a third time t3 and that irradiating the photocurable resin with the light of the first wavelength ends at a fourth time t4, wherein t4 > t3. The third time typically corresponds to a time at which a volume of the photocurable resin which forms the respective three-dimensional object to be printed is irradiated. Particularly, the third time can correspond to a time at which a volume of the photocurable resin which forms an outer boundary or edge of the respective three-dimensional object to be printed and thus, a position at a surface of the respective three-dimensional object to be printed is irradiated. As such, the three-dimensional object to be printed can comprise portions which are to be printed before the third time or the printing of the three-dimensional object is completed before the third time, respectively. Hence, the third time can comprise a time at which the last volume element, such as e.g. the last voxel, of the three-dimensional object to be printed is printed with respect to the formation direction. The fourth time can also correspond to a time at which a volume of the photocurable resin which forms the respective three-dimensional object to be printed is irradiated. Yet, the fourth time can also correspond to a time at which a volume of the photocurable resin which does not form the respective three-dimensional object to be printed is irradiated.

As such, spatially and/or temporally varying the at least one printing parameter, particularly a printing parameter influencing the curing behavior of the photocurable resin, can comprise that the photocurable resin is irradiated with the light of the first wavelength, particularly only with the light of the first wavelength, in a volume separate, particularly adjacent, more particularly directly adjacent, to the volume in which the three-dimensional object is to be printed, particularly wherein the volume is spatially and/or temporally before and/or behind the volume in which the three-dimensional object is to be printed with respect to the at least one formation direction of the three-dimensional object. In such a manner, pre- or post-activating the photocurable resin can be effected which can positively influence the structural properties of the three-dimensional object to be printed.

Thus, spatially and/or temporally irradiating the photocurable resin with the light of the or a first wavelength before or after it is irradiated with the light of the or a second wavelength can generally comprise that volume elements of the photocurable resin which volume elements do not form part of a three-dimensional object to be printed can be irradiated (only) with the light of the first wavelength. Such volume elements can be positioned, with respect to the formation direction of a three-dimensional object to be printed, before or in front of the volume elements which form part of the respective three-dimensional object to be printed, preferably before or in front of the first volume element of the three-dimensional object to be printed with respect to the formation direction, or after or behind the volume elements which form part of the respective three-dimensional object to be printed, preferably behind or after the last volume element of the three-dimensional object to be printed with respect to the formation direction.

It is also conceivable though that volume elements of the photocurable resin which do not form part of a three-dimensional object to be printed can be irradiated (only) with the light of the second wavelength such that the above remarks can also accordingly apply to the light of the second wavelength.

According to another exemplary embodiment, spatially and/or temporally varying the at least one printing parameter, particularly a printing parameter influencing the curing behavior of the photocurable resin, can comprise irradiating the photocurable resin with the light of the or a first wavelength and/or the or a second wavelength and spatially and/or temporally varying the energy, particularly the energy intensity, of the light of the first wavelength and/or the second wavelength, along the at least one direction. Spatially and/or temporally varying the energy, particularly the energy intensity, of the light of the first wavelength and/or the second wavelength, along the at least one direction can also positively influence the structural properties of the three-dimensional object to be printed, e.g. because it enables a control that each volume element of a three-dimensional object to be printed obtains a specific amount of energy which results in a desired curing of the respective volume element. As such, problems based on different degrees of curing of different volume elements of a three-dimensional object to be printed, which typically also lead to undesired structural anisotropy of the three-dimensional object, can be overcome or at least reduced. Likewise, the proximity-effect (as explained further above) can be overcome or at least reduced because one or more volume elements in proximity to other volume elements which have already been cured or photopolymerized, respectively can be irradiated with a different energy relative to one or more volume elements which are not in proximity to other volume elements which have already been cured or photopolymerized, respectively.

Particularly, spatially and/or temporally varying the energy or energy intensity, respectively can comprise that the energy level of the light of the or a first wavelength can be varied from a first energy level to at least a second energy level, the at least one second energy level being higher or lower than the first energy level. Hence, the energy or energy intensity, respectively of the light of the first wavelength can be dynamically or gradually spatially and/or temporally increased or decreased during the at least one irradiation process, particularly with respect to a nominal value which can be, but is not limited to, a minimum or maximum energy or energy intensity, respectively.

Additionally or alternatively, spatially and/or temporally varying the energy or energy intensity, respectively of the second wavelength can comprise that the energy level of the light of the or a second wavelength can be varied from a first energy level to at least a second energy level, the at least one second energy level being higher or lower than the first energy level. Hence, the energy or energy intensity, respectively of the light of the second wavelength can be dynamically or gradually spatially and/or temporally increased or decreased during the at least one irradiation process, particularly with respect to a nominal value which can be, but is not limited to, a minimum or maximum energy level or energy intensity level, respectively.

As an example, spatially and/or temporally varying the energy, particularly the energy intensity, of the light of the or a second wavelength along the at least one direction can comprise that one or more image elements, e.g. pixels, of respective images corresponding to a cross-sectional geometry of a three-dimensional object to be printed are spatially and/or temporally varied with respect to their energy or energy density, respectively. In other words, a respective projection of one or more images can comprise image elements of different energy or energy density, respectively. Varying the energy or energy density, respectively of respective image elements can comprise energy levels or energy density levels, respectively between minimum energy levels or minimum energy density levels, respectively and maximum energy levels or maximum energy density levels, respectively. Likewise, varying the energy or energy density, respectively of respective lines or points can comprise varying the energy levels or energy density levels, respectively between minimum energy levels or minimum energy density levels, respectively and maximum energy levels or maximum energy density levels, respectively. Varying the energy or energy density, respectively of respective image elements or points or lines, respectively can be effected by controlling a respective irradiation device used for generating respective projections of images or points or lines, respectively.

As another example, spatially and/or temporally varying the energy, particularly the energy intensity, of the light of the or a second wavelength along the at least one direction can comprise that one or more image elements, e.g. pixels, of respective images which correspond to a cross-sectional geometry of a three-dimensional object to be printed and/or one or more image elements, e.g. pixels, of respective images which do not correspond to a cross-sectional geometry of a three-dimensional object to be printed can be spatially and/or temporally varied such that the energy or energy intensity, respectively does not effect curing of the photocurable resin. Hence, spatially and/or temporally varying the energy, particularly the energy intensity, of the light of the second wavelength can comprise that the energy or energy intensity, respectively can be spatially and/or temporally set to a level which does not result in curing of the photocurable resin or to a level which results in undercuring of the photocurable resin. Yet, it is also conceivable that spatially and/or temporally varying the energy, particularly the energy intensity, of the light of the second wavelength can comprise that the energy or energy intensity, respectively can be spatially and/or temporally set to a level which results in overcuring of the photocurable resin. Particularly, spatially and/or temporally varying the energy, particularly the energy intensity, of the light of the second wavelength along the at least one direction can comprise that the first volume elements of the three-dimensional object to be printed with respect to the formation direction are irradiated with light of the second wavelength having a higher intensity than further volume elements of the three-dimensional object to be printed. In such a manner, a means for compensating the proximity-effect is given.

According to another exemplary embodiment, the photocurable resin can be irradiated with the light of the or a first wavelength at the first energy level, which can be a comparatively higher energy level compared to a nominal energy level or a second energy level, in an initial volume of the to be printed three-dimensional object which initial volume comprises at most 10%, particularly at most 9%, more particularly at most 8%, more particularly at most 7%, more particularly at most 6%, more particularly at most 5%, more particularly at most 4%, more particularly at most 3%, more particularly at most 2%, more particularly at most 1%, more particularly at most 0.9%, more particularly at most 0.8%, more particularly at most 0.7%, more particularly at most 0.6%, more particularly at most 0.5%, more particularly at most 0.4%, more particularly at most 0.3%, more particularly at most 0.2%, more particularly at most 0.1%, more particularly at most at most 0.09%, more particularly at most 0.08%, more particularly at most 0.07%, more particularly at most 0.06%, more particularly at most 0.05%, more particularly at most 0.04%, more particularly at most 0.03%, more particularly at most 0.02%, more particularly at most 0.01%, of the spatial extension of the three-dimensional object to be printed in the at least one direction. Irradiating the photocurable resin with the light of the first wavelength at a higher energy level in an initial volume of the to be printed three-dimensional object in the at least one direction can particularly, result in compensation or at least reduction of the proximity-effect, for instance and thus, lead to three-dimensional objects with less structural anisotropy and improved structural properties.

Additionally or alternatively, the photocurable resin can be irradiated with the light of the or a first wavelength at the first energy level, which can be a comparatively higher energy level compared to a nominal energy level or a second energy level, for an initial time of at most 10 sec, particularly at most 9 sec, more particularly at most 8 sec, more particularly at most 7 sec, more particularly at most 6 sec, more particularly at most 5 sec, more particularly at most 4 sec, more particularly at most 3 sec, more particularly at most 2 sec, more particularly at most 1 sec, more particularly at most 0.9 sec, more particularly at most 0.8 sec, more particularly at most 0.7 sec, more particularly at most 0.6 sec, more particularly at most 0.5 sec, more particularly at most 0.4 sec, more particularly at most 0.3 sec, more particularly at most 0.2 sec, more particularly at most 0.1 sec, more particularly at most at most 0.09 sec, more particularly at most 0.08 sec, more particularly at most 0.07 sec, more particularly at most 0.06 sec, more particularly at most 0.05 sec, more particularly at most 0.04 sec, more particularly at most 0.03 sec, more particularly at most 0.02 sec, more particularly at most 0.01 sec, of the overall duration of the at least one irradiation process, particularly the overall duration of the period of the at least one irradiation process in which the photocurable resin is cured by multi-color photopolymerization to print a three-dimensional object. The respective times can correspond to periods of the at least one irradiation process in which at least the first frame, particularly at most the first 100 frames, more particularly at most the first 90 frames, more particularly at most the first 80 frames, more particularly at most the first 70 frames, more particularly at most the first 60 frames, more particularly at most the first 50 frames, more particularly at most the first 40 frames, more particularly at most the first 30 frames, more particularly at most the first 20 frames, more particularly at most the first 10 frames, of a projection of images of the light of the second wavelength is irradiated into the photocurable resin.

According to another exemplary embodiment, spatially and/or temporally varying the at least one printing parameter, particularly a printing parameter influencing the curing behavior of the photocurable resin, can comprise varying a focus parameter, such as e.g. the size and/or the position, of the or a focus of the light of the or a first wavelength and/or varying an image parameter, e.g. the size and/or the position, of an image or of at least one image element, e.g. a pixel, of an image projected with the light of the or a second wavelength. Hence, a focus parameter, such as e.g. the size and/or the position, focal length, depth of focus, depth of field, of the or a focus of the light of the first wavelength, which can comprise a plurality of light beams, particularly a plurality of (substantially) parallel light beams, extending through the photocurable resin, e.g. in the shape of a light sheet, can be a printing parameter which can be varied during the at least one irradiation process which enables e.g. spatially and/or temporally influencing the curing result in the formation zone and the resolution of features of the three-dimensional object to be printed, respectively. Varying one or more focus parameters of the light of the first wavelength can be implemented by one or more optical elements, such as e.g. (moveable) lenses, assigned to the irradiation device used for generating the light of the first wavelength and respective light beams extending through the photocurable resin, for instance. Respective optical elements can form part of a focus adjusting device of the irradiation device which can be configured for adjusting one or more focus parameters of the light of the first wavelength. Additionally or alternatively, an image parameter, such as e.g. the size and/or the position, of the or a projected image or at least one image element of the light of the second wavelength, which can comprise a projection of images corresponding to a cross-sectional geometry of a three-dimensional object to be printed, can be a printing parameter which can be varied during the at least one irradiation process which enables e.g. spatially and/or temporally influencing the curing result in the formation zone and the resolution of features of the three-dimensional object to be printed, respectively. Varying one or more image parameters of an image of the light of the second wavelength can be implemented with one or more optical elements, such as e.g. (moveable) lenses, pixel generators, etc., assigned to the irradiation device used for generating the light of the second wavelength and respective images corresponding to a cross-sectional geometry of a three-dimensional object to be printed, for instance. Respective optical elements can form part of an image adjusting device of the irradiation device which can be configured for adjusting one or more image parameters of the light of the second wavelength. A respective image adjusting device can be a hardware- and/or software-embodied component of a light projection device, such as e.g. a digital light projection device, for instance.

According to another exemplary embodiment, spatially and/or temporally varying the energy of the light of the or a second wavelength can comprise varying the energy or energy distribution of at least a part, e.g. a pixel, of at least one projected image corresponding to a cross-sectional geometry of a three-dimensional object to be printed or of at least one point or line of at least one light beam corresponding to a cross-sectional geometry of a three-dimensional object to be printed. Particularly, the energy of the light of the second wavelength can be varied along the at least one direction such that, with respect to the formation direction, upstream portions of the three-dimensional object to be printed are exposed to different energy levels of the light of the second wavelength as downstream portions of the three-dimensional object to be printed. As indicated above, spatially and/or temporally varying the energy of the light of the second wavelength can lead to three-dimensional objects with less structural anisotropy and improved structural properties.

As an example, spatially and/or temporally varying the energy or energy intensity, respectively of the light of the second wavelength can comprise varying the energy or energy intensity, respectively of at least a part of at least one image, particularly at least one image element, e.g. a pixel, of the image, in a sequence comprising at least three energy levels E1, E2, and E3 or energy intensity levels, respectively E1, E2, and E3, wherein the energy level or energy intensity level, respectively is changed from E1 to E2, with E2>E1, and wherein the energy level or energy intensity level, respectively is changed from E2 to E3 and E2>E3 and particularly E3>E1 or E1=0, for instance. Particularly, the first energy level E1 can be assigned to one or more volume elements of the photocurable resin in which no or only little photopolymerization of the photocurable resin is desired; such volume elements of the photocurable resin can comprise volume elements which do not form part of a three-dimensional object to be printed. As such, the first energy level can also be (substantially) zero (E1=0). Particularly, the second energy level E2 can be assigned to one or more volume elements of the photocurable resin which do form part of a three-dimensional object to be printed. Specifically, the second energy level E2 can be assigned to one or more volume elements of the photocurable resin which form part of at least the first volume element of a three-dimensional object to be printed or the first volume element of a portion of the three-dimensional object to be printed with respect to the formation direction. Specifically, the third level E3 can be assigned to one or more volume elements of the photocurable resin which form part of further volume elements of the three-dimensional object to be printed which further volume elements are located behind the first volume element of three-dimensional to be printed with respect to the formation direction. Further, a fourth energy level E4 can be implemented and assigned to one or more volume elements of the photocurable resin which do not form part of the three-dimensional to be printed. Particularly, the fourth energy level E4 can be assigned to volume elements of the photocurable resin which are located behind the last volume elements of the photocurable resin which form part of the three-dimensional object to be printed. As such, the fourth energy level E4 can also be (substantially) zero (E4=0).

According to another exemplary embodiment, spatially and/or temporally varying the at least one printing parameter, particularly a printing parameter influencing the curing behavior of the photocurable resin, can comprise irradiating the photocurable resin with the light of the or a first wavelength and/or the light of the or a second wavelength while the at least one formation zone is not moving relative to the or a respective container during the at least one irradiation process or while the at least one formation zone is moved at a varied motion rate which is lower than the nominal motion rate. A respective varied motion rate can also be zero. Hence, also the motion rate at which the at least one formation zone is moved, particularly relative to the or a respective container, is a printing parameter which can be spatially and/or temporally varied, e.g. to achieve printing three-dimensional objects having higher structural isotropy.

As an example, irradiating the photocurable resin with the light of the first wavelength and/or the light of the second wavelength while the at least one formation zone is not moving relative to the or a respective container during the at least one irradiation process or while the at least one formation zone is moving at a motion rate which is lower than the nominal motion rate can comprise irradiating the photocurable resin with the light of the first wavelength while the photocurable resin moves comparatively slow or does not even move relative to the container such that the respective volume elements of the photocurable resin are irradiated with the light of the first wavelength for a comparatively long period. In this period, the light of the second wavelength can comprise constant images or stationary images, for instance. Alternatively, in this period, no light of the second wavelength is irradiated into the photocurable resin and the working volume, for instance.

According to another exemplary embodiment, spatially and/or temporally varying the at least one printing parameter, particularly a printing parameter influencing the curing behavior of the photocurable resin, can also comprise irradiating the photocurable resin with the light of the or a first wavelength and/or the or a second wavelength while the at least one formation zone is moved along two different directions. Hence, also the motion direction along which the at least one formation zone is moved, particularly relative to the or a respective container, is a printing parameter which can be spatially and/or temporally varied, e.g. to achieve printing three-dimensional objects having higher structural isotropy.

As an example, the at least one formation zone can be moved along a first motion path in a first motion direction while it is irradiated with the light of the or a first wavelength and/or light of the or a second wavelength, particularly while it is irradiated only with the light of the first wavelength, and the at least one formation zone is moved along a second motion path in a second motion direction, particularly opposite the first direction, while it is irradiated with the light of the first and/or the second wavelength, particularly while it is irradiated with the light of both the first and second wavelength. Particularly, the first motion direction can be a motion direction towards or away from an irradiation device, particularly a digital light projection device, of an device used for implementing the method which generates the light of the second wavelength and the second motion direction can be opposition thereto, or vice versa.

As another example, the first motion path can differ, particularly in length, from the second motion path. Particularly, the first motion path can be shorter than the second motion path. As such, the irradiation of the photocurable resin with the light of the first wavelength applied to the photocurable resin when the at least one formation zone is moved along the first motion path can be shorter compared to when the at least one formation zone is moved along the second motion path.

According to another exemplary embodiment, spatially and/or temporally varying the at least one printing parameter, particularly a printing parameter influencing the curing behavior of the photocurable resin, can comprise, which particularly applies for embodiments of the method in which multiple separate three-dimensional objects are to be printed, particularly simultaneously, e.g. by setting, that the start position and/or the start time and/or the end position and/or the end time for irradiating the photocurable resin with the light of the second wavelength for printing a first three-dimensional object can be different from the start position and/or the start time for irradiating the photocurable resin with the light of the second wavelength for printing a further three-dimensional object. Particularly, this exemplary embodiment can enable that the photocurable resin is still irradiated with light of the second wavelength, even though printing of at least one three-dimensional object has been completed which will result in that the respective three-dimensional object which has been completed first will have a high(er) structural fidelity. Notably, this exemplary embodiment particularly applies to lateral arrangement of the multiple three-dimensional objects to be printed. As such, their respective formation directions are arranged in parallel.

According to another exemplary embodiment, the at least one irradiation process can comprise irradiating the photocurable resin with the light of the or a first wavelength and the light of the or a second wavelength to form a pre-polymerized three-dimensional pre-component in a first irradiation step, and wherein the pre-polymerized three-dimensional pre-component is irradiated with the light of the first wavelength and the second wavelength in at least one further irradiation step which causes formation of the three-dimensional object, particularly after completion of the first irradiation step. As such, also the number of respective irradiation steps can be a printing parameter which can be spatially and/or temporally varied. Notably, this embodiment can comprise the formation of a pre-polymerized pre-component in a first irradiation step, which three-dimensional pre-component can already comprise a shape and/or dimension (substantially) corresponding to the three-dimensional object which is to be printed. However, the pre-component can differ from the actual three-dimensional object which is to be printed in the degree of curing of the photocurable resin. In other words, the pre-component can have a lower degree of curing of the photocurable resin, e.g. the pre-component can have a degree of curing which does not allow handling of the pre-component for instance. Yet, printing the actual three-dimensional object via a respective intermediate pre-component can result in improved structural properties of the actual three-dimensional object.

As an example, the photocurable resin can be irradiated with the light of the or a first wavelength and the or a second wavelength to form a pre-polymerized pre-component in a first irradiation step, wherein the pre-polymerized pre-component is irradiated with the light of the first wavelength and the second wavelength which causes further polymerization of the pre-polymerized pre-object in a second irradiation step, and wherein the second irradiation step can be repeated multiple times. Notably, the formation zone can be moved along a first motion path in a first motion direction in the first irradiation step and along a second motion path in a second motion direction, particularly opposite the first motion direction, in the at least one second irradiation step.

Generally, the photocurable resin can be irradiated with the light of the or a first wavelength forming a pre-polymerized photocurable resin in a first irradiation step, and wherein the pre-polymerized photocurable resin is irradiated with the light of the first wavelength and the second wavelength in at least one further irradiation step which causes formation of the three-dimensional object to be printed, particularly after completion of the first irradiation step.

Particularly, the photocurable resin can be irradiated with the light of the first and the second wavelength forming a pre-polymerized photocurable resin in a first irradiation step, and wherein the pre-polymerized photocurable resin is irradiated with the light of the first wavelength and the second wavelength in at least one further irradiation step which causes formation of the three-dimensional object to be printed, particularly after completion of the first irradiation step. Particularly, the intensity light of the second wavelength in the first irradiation step can be of an intensity lower than the intensity required for curing or solidification of the photocurable resin or the intensity required for causing formation of the three-dimensional object to be printed, respectively. Particularly, in the first irradiation step the intensity distribution of the light of the second wavelength is inhomogeneous. More particularly, in the first irradiation step, the light of the second wavelength can have a lower intensity in outer regions adjacent to the walls of the container delimiting the working volume and a respectively higher intensity in inner regions of the working volume, such as e.g. in the middle of the working volume. As an example, the light of the second wavelength can be projected as an image having higher intensity in respective inner regions. A respective image can be a gray or white image, for example. Also printing the actual three-dimensional object via a respective intermediate pre-polymerized photocurable resin can result in improved structural properties of the actual three-dimensional object to be printed.

According to another exemplary embodiment of the method, the formation time of the three-dimensional object can be at most 1 min per 1 mm extension of the three-dimensional object in the at least one direction. As such, the method can be implemented with high printing speeds which is another exemplary printing parameter which can influence the curing behavior of the photocurable resin and thus, have an effect of the formation of undesired deformations of the at least one three-dimensional object.

A second aspect of the invention relates to a system for manufacturing a three-dimensional object via volumetric printing. The system is particularly configured to perform the method of the first aspect of the invention such that all annotations concerning the method of the first aspect of the invention apply to the system of the second aspect of the invention and vice versa. The system can comprise at least the following: a volumetric printing device for performing a volumetric printing process to manufacture at least one three-dimensional object on basis of data comprising information of a geometric model of the at least one three-dimensional object to be manufactured, wherein the volumetric printing process is performed on basis of a number of process parameters; a determination device for determining at least one property of the at least one three-dimensional object printed in step a) and generating a determination information indicative of the at least one determined property of the at least one three-dimensional object printed in step a); and a controller for comparing the at least one determined property of the at least one three-dimensional object printed in step step a) with at least one reference property, particularly a nominal or target property, of a reference three-dimensional object, particularly a nominal or target three-dimensional object, and generating a comparison information indicative of the comparison result. Notably, the controller is particularly, configured to perform the following steps: determine if the comparison result indicates that a deviation between the determined at least one property of the at least one three-dimensional object printed in step a) and the at least one reference property of the reference three-dimensional object exceeds a threshold value; and if the comparison result indicates that a deviation between the determined at least one property of the at least one three-dimensional object printed in step a) and the at least one reference property of the reference three-dimensional object exceeds the threshold value, change at least one of: at least one parameter of the geometric model of the three-dimensional object to be manufactured, at least one process parameter of the volumetric printing process, at least one process parameter of a post-processing process. Further, the at least one controller is configured to repeat steps a) - d) or a) - e) with the changed at least one parameter of the geometric model of the three-dimensional object to be manufactured and/or with the changed parameter of the at least one process parameter of the volumetric printing process until the comparison result indicates that the deviation between the determined at least one property of the or at least one three-dimensional object printed in step a) and the at least one reference property of the reference three-dimensional object does not exceed the threshold value.

The system can be configured to print at least one three-dimensional object via volumetric printing based on photopolymerization, particularly multi-color photopolymerization, more particularly dual-color polymerization, of a photocurable resin. As such, the volumetric printing device of the system can be a xolography device, i. e. a device configured to perform the base principles of xolography, for example. The base principles of xolography are specified in WO 2020/245456 A1, the contents of which are incorporated herein by reference.

The volumetric printing device therefore, typically comprises a container for receiving photocurable resin. The container can be moveably supported in at least one direction. The at least one direction can be or comprise the formation direction of a respective three-dimensional object to be printed.

The volumetric printing device can further comprise a dual-color irradiation device configured to irradiate a photocurable resin inside the or a respective container. The dual-color irradiation device is configured to irradiate the photocurable resin with light of a first wavelength and, particularly simultaneously, with light of a second wavelength different from the first wavelength. The dual-color irradiation device can comprise at least one first irradiation device comprising at least one first light source for generating the light of the first wavelength and at least one second irradiation device comprising at least one second light source for generating the light of the second wavelength. The dual-color irradiation device can be configured to generate a light sheet from the light of the first wavelength, wherein the light sheet extends in a light sheet plane. Further, the dual-color irradiation device can be configured to generate a light projection of the light of the second wavelength, wherein the light projection intersects with the light sheet at an intersection angle, particularly an intersection angle of (ca.) 90°. A light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

The at least one first irradiation device can thus, comprise at least one light source configured to irradiate light of a first wavelength towards the photocurable resin to generate at least one first light projection forming a light sheet. A respective light sheet can comprise multiple light beams extending in a common plane. The at least one first irradiation device can be built as or comprise a laser or light emitting diode, for instance. The at least one first irradiation device can further comprise at least one optical element which can e.g. comprise at least one of: a Powell-lens, a cylindrical lens, a diffractive optical element, a beam expanding element, a collimating optical element, etc. Additionally or alternatively, the at least one first irradiation device can comprise a light deflection unit, such as e.g. a (moveable or rotatable) mirror, a galvo-scanner, or a polygon scanner, for deflecting light towards the photocurable resin. The at least one first irradiation device can be configured to vary the focus or at least one focus parameter, particularly at least one of: the focus position, the focal length, the depth of focus, or the depth of field, of at least one respective first light projection within the working volume. Particularly, the at least one first irradiation device can be configured to vary the focus or at least one focus parameter with respect to the size of the formation zone. The at least one first irradiation device can comprise one or more controllers configured to vary the focus or at least one focus parameter, particularly at least one of: the focus position, the focal length, the depth of focus, or the depth of field, of at least one respective first light projection within the working volume. Additionally or alternatively, the at least one first irradiation device can comprise one or more optical elements, such as e.g. lenses, particularly adaptable or adjustable lenses, which are configured to vary the focus or at least one focus parameter, particularly at least one of: the focus position, the focal length, the depth of focus, or the depth of field, of at least one respective first light projection within the working volume. The light emitted or irradiated by the at least one first irradiation device can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin.

The at least one second irradiation device can thus, comprise at least one second light source configured to continuously project a projection of images corresponding to a cross-sectional geometry of a three-dimensional object to be printed or a plurality of points or lines corresponding to a cross-sectional geometry of a three-dimensional object to be printed. The second irradiation device can be built as or comprise an image projection device, particularly a digital light projection device, or a directed light emission device, for instance. The at least one second irradiation device can further comprise one or more light projection optics. The at least one second irradiation device can be configured to change the size of at least one image of the projection of images or of at least one image element, such as e.g. a pixel, of at least one image of the projection of images. The at least one second irradiation device can comprise one or more controllers configured to change the size of at least one image of the projection of images or of at least one image element, such as e.g. a pixel, of at least one image of the projection of images. Additionally or alternatively, the at least one second irradiation device can comprise one or more optical elements, such as e.g. lenses, which are configured to change the size of at least one image of the projection of images or of at least one image element, such as e.g. a pixel, of at least one image of the projection of images. The light emitted or irradiated by the at least one second irradiation device can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin.

As indicated above, the dual-color irradiation device can be configured to generate a projection of images from the light of the second wavelength, wherein the light projection intersects with the light sheet at an intersection angle, particularly an intersection angle of (ca.) 90°. The dual-color irradiation device can thus, be generally configured to irradiate the light of the first wavelength at a first angle, particularly an angle of 0 - 180°, and the light of the second wavelength at a second angle, particularly an angle of 0 - 180°, relative to the main extension plane of the at least one formation zone. Respective angles can particularly, range between 15 and 165°, more particularly between 30 and 150°, more particularly between 90 and 150° or between 30 and 90°. Particularly, the light of the second wavelength can be irradiated with respect to the light of the first wavelength at an angle of 90°.

Optionally, the system can also comprise a post-processing device, such as e.g. a post-curing device which can comprise an energy source, e.g. a radiation source and/or a radiation source, for applying post-curing energy to a three-dimensional object to be post-cured, and/or a handling device for transferring at least one three-dimensional object within the system, e.g. from the printing device to the post-processing device.

A third aspect of the invention relates to a computer program product comprising instructions to cause the controller of the system of the second aspect of the invention to execute the steps of the method of the first aspect of the invention such that all annotations concerning the method of the first aspect of the invention and the system of the second aspect of the invention also apply to the computer program product of the third aspect of the invention and vice versa.

### Brief description of the drawings

With these and other advantages and features that will become hereinafter apparent, a more complete understanding of the invention can be obtained by referring to the following description of the appended drawings in which:
Fig. 1 shows a principle drawing of a volumetric printing device for printing a three-dimensional object according to an exemplary embodiment;
Fig. 2 shows a principle drawing of a system for manufacturing a three-dimensional object via volumetric printing according to an exemplary embodiment;
Fig. 3 shows a flow chart of a method for manufacturing a three-dimensional object via volumetric printing according to an exemplary embodiment;
Fig. 4 shows exemplary embodiments of three-dimensional objects manufactured in accordance with the method of Fig. 3 and a reference object; and
Fig. 5 shows a principle drawing of an exemplary embodiment of a method for manufacturing a three-dimensional object via volumetric printing according to another exemplary embodiment.

### Detailed description of the drawings

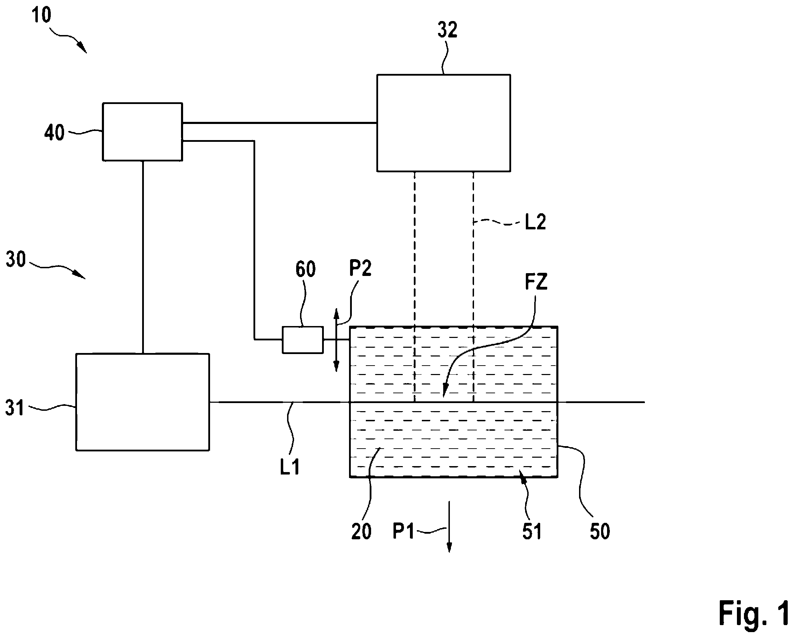

Fig. 1 shows a principle drawing of a volumetric printing device 10 for printing a three-dimensional object according to an exemplary embodiment. The device 10 is configured for volumetric printing at least one three-dimensional object by dual-color photopolymerization of a photocurable resin 20 and comprises an irradiation device 30 for performing an irradiation process of irradiating a photocurable resin 20 with light L1 of a first wavelength and light L2 of a second wavelength, different from the first wavelength, to form, by dual-color photopolymerization, a three-dimensional object in at least one direction. The direction is indicated by arrow P1 in Fig. 1 and can be or comprise the formation direction of a three-dimensional object to be printed. As is apparent from Fig. 1, the light L1 of the first wavelength and the light L2 of the second wavelength intersect in a formation zone FZ.

The light L1 of the first wavelength can comprise a light sheet comprising a plurality of light beams extending through the photocurable resin 20. Respective light beams can comprise a light plane, for instance. A light plane can be or comprise a light plane in which the or a plurality of light beams, particularly (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing device used for implementing the method, for instance.

The light L2 of the second wavelength can comprise a projection of images corresponding to a cross-sectional geometry of the three-dimensional object to be printed or a plurality of points or lines corresponding to a cross-sectional geometry of the three-dimensional object to be printed. Respective points or lines can form a pattern, such as e.g. a hatch pattern. A respective projection can be generated by a light projection device, such as e.g. a digital light projection device, which can form part of an irradiation device of a volumetric printing device used for implementing the method. A respective point or line can be generated by a directed light emission device, such as e.g. a laser device, which can form part of the irradiation device 30 of the device. Both the light projection device and the directed light emission device can be examples of a second irradiation device 32 as will be explained further below.

Particularly, the device 10 can be or comprise a volumetric printing device, particularly a xolography device, i. e. a device configured to perform the base principles of xolography. The base principles of xolography are specified in WO 2020/245456 A1, the contents of which are incorporated herein by reference.

The device 10 comprises a hardware- and/or software-embodied controller 40 configured to spatially and/or temporally vary at least one printing parameter, particularly a process parameter influencing the curing (behavior) of the photocurable resin 20, during the printing process.

The device 10 comprises a container 50 for receiving photocurable resin 20. The container 50 delimits a container volume 51 which can comprise a working volume in which at least one three-dimensional object can be printed. One or more walls of the container 50 can be made of a material which enables irradiating the photocurable resin inside the container 50 with the light L1, L2 of the first and the second wavelength. A respective material can thus, be a transparent material with respect to the light L1, L2 of the first and second wavelength. A respective transparent material can be or comprise glass or a polymer, such as e.g. polycarbonate, polymethylmethacrylate, or cyclic olefin copolymer, for instance.

The container 50 can be moveably supported in at least one direction (indicated by double-arrow P2 in Fig. 1) e.g. via an associated drive device 60, e.g. an electric motor. As is apparent from Fig. 1, the at least one direction can be or comprise the formation direction of a respective three-dimensional object to be printed. Notably, the drive device 60 could also be associated with a first irradiation device 31 of the irradiation device 30 of the device 10 to move the first irradiation device 31 in analogous manner in at least one direction.

The device 10 further comprises the irradiation device 30 which can be a dual-color irradiation device configured to irradiate the photocurable resin inside the container 50 with the light L1, L2 of the first and second wavelength. Particularly, the irradiation device 30 can be configured to simultaneously irradiate the photocurable resin 20 inside the container 50 with the light L1, L2 of the first and second wavelength. The irradiation device 30 can be configured to generate a light sheet from the light L1 of the first wavelength, wherein the light sheet extends in a light sheet plane. Further, the irradiation device 30 can be configured to generate e.g. a light projection from the light L2 of the second wavelength, wherein the light projection intersects with the light sheet at an intersection angle, particularly an intersection angle of (ca.) 90°.

As is apparent from Fig. 1, the irradiation device 30 can comprise a first irradiation device 31 comprising at least one first light source for generating and emitting the light L1 of the first wavelength and a second irradiation device 32 comprising at least one second light source for generating and emitting the light L2 of the second wavelength.

The first irradiation device 31 can comprise at least one light source configured to generate and irradiate light L1 of the first wavelength towards the photocurable resin 20 to generate a light sheet. The first irradiation device 31 can be built as or comprise a laser or light emitting diode, for instance. The first irradiation device 31 can further comprise at least one optical element which can e.g. comprise at least one of: a Powell-lens, a cylindrical lens, a diffractive optical element, a beam expanding element, a collimating optical element, etc. Additionally or alternatively, the first irradiation device 31 can comprise a light deflection unit, such as e.g. a (moveable, particularly rotatable) mirror, a galvo-scanner, or a polygon scanner, for deflecting light towards the photocurable resin 20. The first irradiation device 31 can be configured to vary the focus or focus parameter, particularly at least one of: the focus position, the focal length, the depth of focus, or the depth of field, of at least one respective first light projection within the working volume. Particularly, the first irradiation device 31 can be configured to vary the focus or at least one focus parameter with respect to the size of the formation zone. The first irradiation device 31 can comprise one or more controllers configured to vary the focus or a focus parameter, particularly at least one of: the focus position, the focal length, the depth of focus, or the depth of field, of at least one respective first light projection within the working volume. Additionally or alternatively, the first irradiation device 31 can comprise one or more optical elements, such as e.g. lenses, particularly adaptable or adjustable lenses, which are configured to vary the focus or a focus parameter, particularly at least one of: the focus position, the focal length, the depth of focus, or the depth of field, of at least one respective first light projection within the working volume. The light L1 generated by the first irradiation device 31 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin 20.

The second irradiation device 32 can comprise at least one second light source configured to continuously emit images of light L2 of the second wavelength towards the photocurable resin 20, wherein each image can correspond to a specific cross-section of a three-dimensional object to be printed, or a plurality of points or lines corresponding to a cross-sectional geometry of a three-dimensional object to be printed. The second irradiation device 32 can be built as or comprise an image projection device, particularly a digital light projection device, or a directed light emission device, for instance. The second irradiation device 32 can further comprise one or more light projection optics. The second irradiation device 32 can thus, generate image elements, such as e.g. voxels, having a specific focus and/or size, for instance. The second irradiation device 32 can be configured to change the size of at least one image of the projection of images or of at least one image element, such as e.g. a pixel, of at least one image of the projection of images. The second irradiation device 32 can comprise one or more controllers configured to change the size of at least one image of the projection of images or of at least one image element, such as e.g. a pixel, of at least one image of the projection of images. Additionally or alternatively, the second irradiation device 32 can comprise one or more optical elements, such as e.g. lenses, which are configured to change the size of at least one image of the projection of images or of at least one image element, such as e.g. a pixel, of at least one image of the projection of images. The light L2 emitted or irradiated by the second irradiation device 32 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 20.

As is apparent from above, the irradiation device 30 can be generally configured to irradiate the light L1 of the first wavelength at a first angle, particularly an angle of 0 - 180°, and the light L2 of the second wavelength at a second angle, particularly an angle of 0 - 180°, relative to the extension direction of the light L1 of the first wavelength. Respective angles can particularly, range between 15 and 165°, more particularly between 30 and 150°, more particularly between 90 and 150° or between 30 and 90°. Particularly, the light L2 of the second wavelength can intersect the light L1 of the first wavelength at an angle of 90° (as is exemplarily shown in Fig. 1).

Irradiating the photocurable resin 20 with the light L1 of the first wavelength causes one or more photoinitiator molecules of the photocurable resin 20 to transfer from an initial state into an intermediate state with changed optical properties compared to the initial state, such that the molecules of the one or more photoinitiators in the intermediate state can absorb the light L2 of the second wavelength which results in that the molecules of the one or more photoinitiators are transferred from the intermediate state to a reactive state by absorption of light L2 of the second wavelength which locally triggers the polymerization of the photocurable resin 20 to form at least one three-dimensional object.

The photocurable resin 20 can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin 20. Photopolymerization of the photocurable resin 20 is thus, effected by irradiating the photocurable resin 20 with the light L1 of the first wavelength and, particularly simultaneously, the light L2 of the second wavelength which results in that molecules of the one or more photoinitiators of the photocurable resin 20 are converted, e.g., due to the absorption of the light L1 of the first wavelength, from an initial state in which the molecules of the one or more photoinitiators (substantially) do not absorb the light L2 of the second wavelength, into an intermediate state with changed optical properties compared to the initial state, such that the molecules of the one or more photoinitiators in the intermediate state absorb the light L2 of the second wavelength which results in that the molecules of the one or more photoinitiators are transferred from the intermediate state to a reactive state which locally triggers the polymerization of the photocurable resin 20 to form at least one three-dimensional object.

Suitable photoinitiators of a respective photocurable resin 20 are e.g. known from US5230986A, WO2020245456A1, WO2023034398A1, WO2023034402A1, WO2023220461A1, WO2023220463A1, the contents of which are incorporated herein by reference.

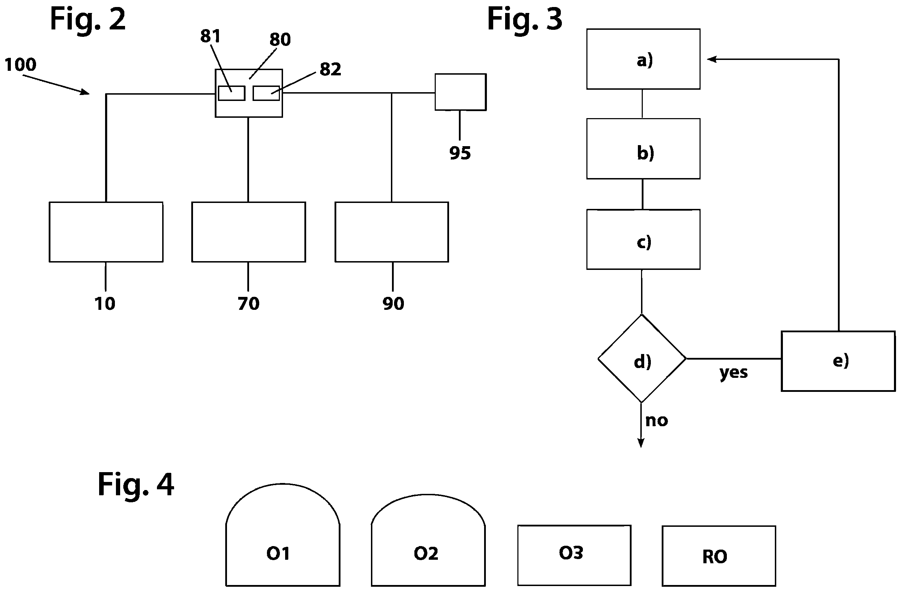

Fig. 2 shows a principle drawing of a system 100 for manufacturing a three-dimensional object via volumetric printing according to an exemplary embodiment. The system 100 is particularly, configured to carry out a method for volumetric printing at least one three-dimensional object as will be explained in connection with the exemplary embodiment of Fig. 3.

As is apparent from Fig. 2, the system 100 can comprise at least the following: a volumetric printing device (such as the device 10 of Fig. 1) for performing a volumetric printing process to manufacture at least one three-dimensional object on basis of data comprising information of a geometric model of the at least one three-dimensional object to be manufactured, wherein the volumetric printing process is performed on basis of a number of process parameters; a determination device 70 for determining at least one property of the at least one three-dimensional object printed in step a) and generating a determination information indicative of the at least one determined property of the at least one three-dimensional object printed in step a); a controller 80 for comparing the at least one determined property of the at least one three-dimensional object printed in step a) with at least one reference property, particularly a nominal or target property, of a reference three-dimensional object, particularly a nominal or target three-dimensional object, and generating a comparison information indicative of the comparison result.

Optionally, the system 100 can also comprise a post-processing device 90, such as e.g. a post-curing device which can comprise an energy source, e.g. a radiation source and/or a radiation source, for applying post-curing energy to a three-dimensional object to be post-cured and/or a handling device 95 for transferring a three-dimensional object within the system 100, e.g. from the device 10 to the post-processing device 90.

Notably, the controller 80 is particularly, configured to perform the steps of the method which will be explained in connection with the flow chart of Fig. 3.

The method, as illustrated in Fig. 3, enables manufacturing a three-dimensional object via volumetric printing. A respective three-dimensional object which can be manufactured in accordance with the method can be a technical component or form part of a technical component. Particularly, a respective technical component can be an optical component, such as e.g. an optical lens or an array of optical lenses. Yet, other technical components and three-dimensional objects, respectively are contemplated.

The method comprises in a first step (step a)), a step of performing a volumetric printing process to manufacture at least one three-dimensional object. Step a) thus, comprises a volumetric printing process in which at least one three-dimensional object is manufactured. The direct result of the volumetric printing process of step a) can be at least one green object which can require one or more post-processing steps, e.g. one or more post-curing steps, for converting the at least one green object at least in at least one brown object. Step a) can be performed with the device 10.

The volumetric printing process of step a) is performed on basis of data comprising information of a geometric model of the at least one three-dimensional object to be manufactured. Respective data can be or comprise CAD-data or STL-data, for example. Respective data can thus, comprise information which can describe a surface, particularly a triangulated surface, of a model of the at least one three-dimensional object to be manufactured, e.g. by at least one of: unit normal, vectors, vertices, etc. As such, respective data can be provided in a CAD-data format or a STL-data format, for example. Yet, other data formats are contemplated.

The volumetric printing process of step a) is performed on basis of or comprises a number of process parameters. As a non-limiting example, respective process parameters, which can be or comprise irradiation parameters, can particularly, relate to the polymerization of a photocurable resin provided in a working volume, which photocurable resin is locally polymerized to form, via volumetric printing, the at least one three-dimensional object. As another non-limiting example, respective process parameters can relate to motions of moveable devices of a volumetric printing device used for carrying out step a) of the method, e.g. motions of a container delimiting a respective working volume relative to an irradiation device which is configured to emit light of at least one wavelength into the respective working volume, or vice versa. Generally, one, more, or all process parameters of the volumetric printing process can lead to undesired deformation effects, e.g. bending effects, warping effects, etc., of a three-dimensional object which is to be printed.

The method comprises in a second step (step b)), a step of determining at least one property of the at least one three-dimensional object which has been printed in step a) and generating a determination information indicative of the at least one determined property of the at least one three-dimensional object. Step b) is thus, typically implemented with a determination device, such as the determination device 70, which can comprise one or more determination elements, such as e.g. sensors, configured to determine at least one property of the at least one three-dimensional object which has been printed in step a) and generating a determination information indicative of the at least one determined property of the at least one three-dimensional object. A respective determination information can comprise raw data (which is or can be further processed by a controller), for instance. In either case, a respective determination information can, directly or indirectly, indicate at least one (determined) property of the at least one three-dimensional object which has been printed in the volumetric printing process of step a).

Generally, respective properties of a respective three-dimensional object which can be determined in step b) can comprise at least one chemical property and/or at least one physical property of the respective three-dimensional object. Non-limiting examples of respective chemical properties and/or physical properties will be provided further below.

The method comprises in a third step (step c)), a step of comparing the at least one determined property of the at least one three-dimensional object with at least one reference property, particularly a predefinable or predefined nominal property or a predefinable or predefined target property, of a reference three-dimensional object RO (see Fig. 4), particularly a predefinable or predefined nominal three-dimensional object or a predefinable or predefined target three-dimensional object, and generating a comparison information indicative of the comparison result. Notably, a reference three-dimensional object RO can be a real three-dimensional reference object or a digital representation of a three-dimensional reference object, such as e.g. a model of a three-dimensional reference object, particularly a CAD-model or STL-model, of a three-dimensional object to be manufactured. Step c) is thus, typically implemented with a comparison device 81, which can be or comprise a hardware- and/or software-embodied device and thus, generally a computer-implemented comparison device, which is configured to compare the at least one determined property of the at least one three-dimensional object with at least one reference property and generate a comparison information indicative of the comparison result. The comparison device 81 can comprise or can communicate with a data storage device 82, which can e.g. be or comprise a data server, in which one or more reference properties, e.g. respective predefinable or predefined nominal or target properties of one or more predefinable or predefined nominal or target three-dimensional objects, are stored. The comparison device 81 can comprise one or more algorithms adapted for comparing the at least one determined property of the at least one three-dimensional object with at least one respective reference property and generating a comparison information indicative of the comparison result. As indicated in Fig. 2, the comparison device 81 and/or the data storage device 82 can form part or at least be assigned to the controller 80.

Notably, a respective reference property, e.g. a respective predefinable or predefined nominal or target property, can be, particularly with respect to an intended application and/or function of the at least one three-dimensional object to be manufactured, a desired or required property of the at least one three-dimensional object to be manufactured. Also, a respective reference three-dimensional object, e.g. a respective predefinable or predefined nominal or target three-dimensional object can be, particularly with respect to an intended application and/or function of the at least one three-dimensional object to be manufactured, a desired or required three-dimensional object. As such, a respective predefinable or predefined nominal or target property can correspond to a desired or required property of the at least one three-dimensional object to be manufactured and a predefinable or predefined nominal or target three-dimensional object can correspond to a desired or required three-dimensional object to be manufactured.

The method comprises in a fourth step (step d)), a step of determining if the comparison result indicates that a deviation, if any, between the determined at least one property of the at least one three-dimensional object and the at least one reference property exceeds at least one threshold value. Step d) can also be implemented with the or a respective comparison device 81 which can comprise or can communicate with the or a respective data storage device 82, which can be or comprise a data server, in which respective thresholds values are stored. The comparison device 81 can comprise one or more algorithms adapted for determining if the comparison result indicates that a deviation, if any, between the determined at least one property of the at least one three-dimensional object and the at least one reference property exceeds the at least one threshold value.

As an example, a deviation between a determined property and a related predefinable or predefined nominal or target property of at least 0.1 %, particularly at least 1 %, more particularly at least 5 %, more particularly at least 10 %, more particularly at least 15 %, more particularly at least 20 %, can be deemed a respective deviation which triggers changing at least one of: at least one parameter of the geometric model of the three-dimensional object to be manufactured, at least one process parameter of the volumetric printing process, at least one process parameter of a post-processing process. Yet, respective threshold values will typically, depend at least on a concrete property and a concrete three-dimensional object and thus, will typically, need to be individually set, e.g. based on experimental results, computer-implemented simulations, etc. for each concrete property and each concrete three-dimensional object or at least type of concrete individual object.

If the comparison result indicates that a deviation between the determined at least one property of the at least one three-dimensional object and the at least one reference property exceeds the at least one threshold value (see "yes" in Fig. 3), the method can comprise changing at least one of: at least one parameter of the geometric model of the at least one three-dimensional object to be manufactured, at least one process parameter of the volumetric printing process, at least one process parameter of a post-processing process. As such, the method enables and comprises determining deviations between one or more determined properties of the at least one three-dimensional object printed in step a) and respective one or more reference properties, e.g. predefinable or predefined nominal or target properties. If these deviations are deemed significant, which is the case in which the deviations exceed at least one respective threshold value, the method enables and comprises active and deliberate changes of at least one of: at least one parameter of the geometric model of the at least one three-dimensional object to be manufactured, at least one process parameter of the volumetric printing process, at least one process parameter of a post-processing process, to at least partially reduce or even completely compensate the determined deviations e.g. in one or more upcoming volumetric printing processes. As such, the step of changing at least one of: at least one parameter of the geometric model of the at least one three-dimensional object to be manufactured, at least one process parameter of the volumetric printing process, at least one process parameter of a post-processing process aims at a reduction or full compensation of the determined deviation. The step of changing at least one of: at least one parameter of the geometric model of the at least one three-dimensional object to be manufactured, at least one process parameter of the volumetric printing process, at least one process parameter of a post-processing process, thus, particularly comprises changes of at least one of: at least one parameter of the geometric model of the at least one three-dimensional object to be manufactured, at least one process parameter of the volumetric printing process, at least one process parameter of a post-processing process, which enable a reduction or complete compensation of the determined deviation when repeating one, more, or all the steps of the method.

As such, the step of changing at least one of: at least one parameter of the geometric model of the at least one three-dimensional object to be manufactured, at least one process parameter of the volumetric printing process, at least one process parameter of a post-processing process, can comprise carrying out actions which have been taken in connection with previous volumetric printing processes and/or post-processing processes with which one or more specific properties of a three-dimensional object have been successfully changed by deliberately changing at least one of: at least one parameter of the geometric model of the at least one three-dimensional object to be manufactured, at least one process parameter of the volumetric printing process, at least one process parameter of a post-processing process. As an example, one or more process parameters of a current or an upcoming volumetric printing process can be changed, e.g. by changing one or more irradiation parameters, which had a positive effect on one or more properties of an as-printed three-dimensional object in a previous volumetric printing process. As a more concrete example, previous experimental results, simulations, etc., may have shown that irradiation parameters which relate to the polymerization of a specific photocurable resin, such as e.g. irradiation intensity, irradiation time, irradiation speed, etc., can reduce undesired deformation effects, e.g. caused by bending, warpage, etc., of an as-printed three-dimensional object such that changing such respective irradiation parameters, e.g. by increasing or decreasing one or more of such parameters, can lead to a reduction of undesired deformation effects of at least one three-dimensional object.

Analogous approaches apply to other process parameters of the volumetric printing process. Further, analogous approaches apply to changes of at least one of: at least one parameter of the geometric model of the three-dimensional object to be manufactured and at least one process parameter of a post-processing process, e.g. a parameter that relates to the post-curing of a three-dimensional object, such as e.g. post-curing intensity, post-curing time, post-curing speed, etc., for instance.

If the comparison result indicates that a deviation between the determined at least one property of the at least one three-dimensional object and the at least one reference property exceeds the at least one threshold value, the method cannot only comprise changing at least one of: at least one parameter of the geometric model of the at least one three-dimensional object to be manufactured, at least one process parameter of the volumetric printing process, at least one process parameter of a post-processing process, but also repeating steps a) - d) with the at least one changed parameter of the geometric model of the at least one three-dimensional object to be manufactured and/or with the at least one changed process parameter of the volumetric printing process and/or with the least one changed process parameter of the post-processing process until the comparison result indicates, for at least one further three-dimensional object, that the deviation between the at least one determined property of the at least one further three-dimensional object and the at least one reference property does not exceed the threshold value.

As such, the method can comprise a fifth step (step e)) which comprises, if the comparison result indicates that a deviation between the determined at least one property of the at least one three-dimensional object and the at least one reference property exceeds the at least one threshold value, changing at least one of: at least one parameter of the geometric model of the at least one three-dimensional object to be manufactured, at least one process parameter of the volumetric printing process, at least one process parameter of a post-processing process, and repeating steps a) - d) one or multiple times with the respective changed at least one parameter of the geometric model of the at least one three-dimensional object and/or with the respective changed parameter of the at least one process parameter of the volumetric printing process and/or with the respective changed process parameter of the post-processing process until the comparison result indicates that the deviation between the determined at least one property of the or a further three-dimensional object and the at least one reference property does no longer exceed the at least one threshold value.

The above steps of the method enable an improved manufacturing of three-dimensional objects via volumetric printing as they comprise at least in steps b) and c) an inherent control of one or more properties of a current three-dimensional object which has been manufactured in step a) with regard to one or more desired or required predefinable or predefined nominal or target properties. Further, the method comprises in step e) an active step of changing at least one of: at least one parameter of the geometric model of the at least one three-dimensional object to be manufactured, at least one process parameter of the volumetric printing process, at least one process parameter of a post-processing process, and printing at least one further three-dimensional object on basis of the respective changed parameters; the further three-dimensional object will typically, comprise improved properties, particularly less undesired deformations, relative to the current (or a previous) three-dimensional object. Thus, an optimization process, particularly an iterative optimization process, of manufacturing three-dimensional objects via volumetric printing can be implemented in one or multiple stages, wherein each stage typically, comprises performing steps a) - d) or a) - e) in the above-specified manner.

Notably, one, more or all steps of the method can be, e.g. via the controller 80 of the system 100, implemented at least semi-automatically, particularly fully automatically. Particularly, each change of at least one: at least one parameter of the geometric model of the at least one three-dimensional object to be manufactured, at least one process parameter of the volumetric printing process, at least one process parameter of a post-processing process, can be implemented at least semi-automatically, particularly fully automatically. Hence, the method enables an at least semi-automatic, particularly fully automatic, optimization of a manufacturing method of at least one three-dimensional object via volumetric printing.

The step of determining the at least one property of the at least one three-dimensional object and generating the determination information indicative of the at least one determined property of the at least one three-dimensional object can comprise determining at least one chemical and/or physical property of the at least one three-dimensional object.

The at least one chemical property can be or comprise at least one of: a chemical composition of the at least one three-dimensional object printed in step a), a chemically reactive state of the at least one three-dimensional object printed in step a), particularly a polymerization state of the at least one three-dimensional object printed in step a). Respective chemical properties of the at least one three-dimensional object can be determined via a determination device which can be or comprise at least one of: a spectroscopy device, e.g. via a device for performing spectroscopy, particularly a device for performing UV-vis-, FTIR-, or Raman-spectroscopy, or via a device for performing differential scanning calorimetry, for example.

The at least one physical property can be or comprise at least one of: an acoustic property, an optical property, a geometric property, a mechanical property, a surface property, an electric property, a thermal property, a magnetic property of the at least one three-dimensional object printed in step a). Respective physical properties of the at least one three-dimensional object can be determined via a determination device which can be or comprise at least one of: an interferometer, impedance meter, an optical sensor, such as e.g. a camera or a one- or multi-dimensional scanner, a microscope, an electrical conductivity or resistance meter, a thermal conductivity or resistance meter, a testing machine, e.g. for performing tests under mechanical loads, such as e.g. bending tests, compressive strength tests, tensile strength tests, flexural strength tests, shear strength tests, torsion tests, hardness tests, a roughness meter (profilometer), a magnetometer, etc. Also, a testing device configured to perform a test of at least one function of the at least one three-dimensional object with respect to an intended application and/or function of the at least one three-dimensional object, e.g. a testing device for testing at least one of: an optical function, a geometric function, a mechanical function, a surface function, an electric function, a thermal function, a magnetic function, etc. of the at least one three-dimensional object with respect to an intended application and/or function of the object, can be used for determining if the at least one three-dimensional object printed in step a) fulfills, with respect to an intended application and/or function of the at least one three-dimensional object, a desired or required function.

The at least one determined property of the at least one three-dimensional object can be indicative of a deformation of the at least one three-dimensional object, particularly caused by bending, warping, etc. of the at least one three-dimensional object, more particularly caused by process-induced bending, warping, etc. of the at least one three-dimensional object during the volumetric printing process and/or the or a post-processing process. Any deformation of the at least one three-dimensional object can lead to at least a deviation of at least one property of the at least one three-dimensional object, such as but not limited to a geometric property, relative to the or a reference property of the or a reference three-dimensional object. As such, the or a respective determination device 70 can comprise one or more algorithms adapted to derive, from a determined property of at least one printed three-dimensional object, e.g. via principles of data correlation, principles of artificial intelligence, machine learning, etc., a related deviation from the or a reference property of the or a reference three-dimensional object. Yet, it is also conceivable that a respective deviation is determined by a, particularly measurement-based, comparison of a determined property of at least one three-dimensional object - hence, any determination of a property of a three-dimensional object mentioned herein can generally also comprise a measurement of the respective property of the three-dimensional object - with a related reference property of the or a reference three-dimensional object.

As is apparent from above, the at least one property of the at least one three-dimensional object can also be determined via a measurement device configured to measure at least one chemical and/or physical property of the at least one three-dimensional object. Non-limiting examples of respective measurement devices comprise at least one of the exemplary determination devices 70 mentioned further above. Hence, any one of the exemplary determination devices 70 mentioned further above can also be or comprise a measurement device and vice versa.

Changing the at least one parameter of the geometric model of the at least one three-dimensional object to be manufactured can comprise changing information of a CAD-file, particularly a STL-file, concerning or representing the model of the at least one three-dimensional object to be manufactured. As such, revised CAD- or STL-files can be generated within the framework of the method, particularly in step e), wherein each revision of a CAD- or STL-file can aim at and thus, lead to a reduction of undesired deformation effects and can therefore, have a positive effect on the properties, such as e.g. the geometric accuracy, of at least one further printed three-dimensional object. Changing respective information of a CAD- or STL-file concerning or representing the model of the at least one three-dimensional object to be manufactured can particularly, comprise at least one of re-positioning and/or re-orienting of one or more vertices, e.g. to change a vertex density locally or globally. Yet, one or more other image parameters of a respective CAD- or STL-file can be changed accordingly. Generally, at least one image parameter, particularly a pixel, a voxel, or a vertex, of the model of the at least one three-dimensional object to be manufactured can be changed. As such, information of a CAD-file, particularly a STL-file, concerning or representing a model of the at least one three-dimensional object to be manufactured can be or comprise a pixel, a voxel, a vector, or a vertex, of the model of the at least one three-dimensional object to be manufactured, for example. Experiments have surprisingly shown that respective changes of image parameters, e.g. by re-positioning and/or re-orienting of one or more pixels, voxels, vectors or vertices, can have, with respect to reducing undesired deformation effects of/for one or more further printed three-dimensional objects, a positive effect on the geometric accuracy of the printed three-dimensional objects.

As indicated above, data comprising information of a geometric model of the at least one three-dimensional object to be manufactured and thus, a respective geometric model of the at least one three-dimensional object, such as e.g. a CAD-model or an STL-model, to be manufactured can be further processed, via suitable data processing means, such as e.g. algorithms, software, etc., to generate projections or images, respectively of one or more cross-sectional geometries of the at least one three-dimensional object to be manufactured. As further indicated above, a respective projection of images or respective images can then be, in the course of the volumetric printing process of step a) radiated from one or more directions towards the working volume to effect polymerization of a photocurable resin provided in a working volume, which photocurable resin is locally polymerized to form, via volumetric printing, the at least one three-dimensional object.

The inventors have unexpectedly found that it can be beneficial to directly change at least one parameter of the geometric model of the at least one three-dimensional object to be manufactured rather than processing projections or images, respectively of one or more cross-sectional geometries of the at least one three-dimensional object to be manufactured which have been obtained from a respective model of the at least one three-dimensional object to be manufactured for several reasons. As an example, directly change at least one parameter of the geometric model of the at least one three-dimensional object to be manufactured can be beneficial with respect to the accuracy of the change of the at least one parameter as the original data and no data resulting from further processing the original data, such as a respective projection of images or respective images can be changed. As another example, the computational resources required for changing at least one parameter of the geometric model of the at least one three-dimensional object to be manufactured can be lower compared to a further processing of respective projection of images or respective images. In such a manner, also the efficiency of changing at least one parameter of the geometric model of the at least one three-dimensional object to be manufactured can be increased, e.g. because lesser and/or even less complex computational steps can be required when directly changing at least one parameter of the geometric model of the at least one three-dimensional object to be manufactured.

Notably, changing information of a CAD-file, particularly a STL-file, concerning or representing a model of the at least one three-dimensional object to be manufactured can be implemented at least semi-automatically, particularly fully automatically, on basis of algorithms adapted to change information of a CAD-file, particularly a STL-file, concerning or representing the model of the three-dimensional object to be manufactured with respect to at least one target criterion. A respective target criterion can be or comprise one or more target properties of the three-dimensional object to be printed. Respective target properties can comprise chemical and/or physical properties of the at least one three-dimensional object to be printed. As indicated above, chemical properties can comprise at least one of: a chemical composition of the at least one three-dimensional object printed in step a), and a chemically reactive state of the at least one three-dimensional object printed in step a), particularly a polymerization state of the at least one three-dimensional object printed in step a). As further indicated above, physical properties can comprise at least one of: an acoustic property, an optical property, a geometric property, a mechanical property, a surface property, an electric property, a thermal property, a magnetic property of the at least one three-dimensional object printed in step a). As a non-limiting example, a respective algorithm can be or comprise principles of linear regression for reducing undesired deformation effects and thus, particularly iteratively, enhance the properties of the at least one three-dimensional object to be printed, particularly the fidelity of the at least one three-dimensional object to be printed. However, other computational models as well as principles of artificial intelligence, machine learning, etc. are contemplated.

Changing the at least one process parameter of the volumetric printing process can comprise changing at least one parameter of the irradiation process of the volumetric printing process, which irradiation process comprises, as indicated above, irradiating a photocurable resin within a working volume with light of at least one wavelength. A respective process parameter can be or comprise at least one of: the duration of irradiating the photocurable resin with light of at least one wavelength, a starting time of irradiating the photocurable resin with light of at least one wavelength, an end time of irradiating the photocurable resin with light of at least one wavelength, an intensity of the light used for irradiating the photocurable resin, a wavelength of the light used for irradiating the photocurable resin, a printing speed, a printing direction, an orientation of the three-dimensional object, particularly a main axis of the three-dimensional object, within the working volume, a motion path along which the working volume is moved during the irradiation process, etc.

Changing the at least one process parameter of the volumetric printing process can alternatively or additionally comprise changing at least one parameter of the photocurable resin used for volumetric printing the three-dimensional object. Again, a respective parameter of the photocurable resin can be or comprise a chemical parameter of the photocurable resin, such as e.g. the chemical composition of the photocurable resin, e.g. the concentration and/or type of photoinitiators of the photocurable resin, and/or a physical parameter of the photocurable resin, such as e.g. the density, the temperature, the absorption and/or transmission with respect to light of at least one wavelength, the viscosity of the photocurable resin, etc.

Further, at least one parameter of handling the at least one three-dimensional object via a handling device (such as e.g. the handling device 95), such as e.g. a handling robot, e.g. for transferring it from a volumetric printing device (such as device 10) to a post-processing device (such as post-processing device 90), etc. can be changed. A respective parameter of handling at least one the three-dimensional object can be or comprise changing at least one of: a gripping site of the at least one three-dimensional object at which the at least one three-dimensional object is gripped, e.g. via a gripping device, for handling it, a handling path along which the at least one three-dimensional object is handled, a handling speed (and related forces exerted on the at least one three-dimensional object during handling), etc.

Changing the at least one process parameter of the post-processing process, which can generally be or comprise a post-curing process, can comprise changing at least one of: the duration of the post-processing process, a starting time of the post-processing process, an end time of the post-processing process, an energy, intensity or wavelength of the post-processing process, particularly an energy, intensity, or wavelength of radiation applied to the at least one three-dimensional object during the post-processing process, the temperature or temperature profile of the post-processing process, a wavelength, a speed of the post-processing process, at least one parameter, such as e.g. a chemical parameter, such as e.g. chemical composition, concentration, etc., a physical parameter, a streaming parameter, a concentration parameter, of at least one process gas, such as e.g. an inert gas, of the post-processing process, etc. A respective temperature or temperature profile can particularly, be changed in connection with a sintering process which is an example of a respective post-processing process. Respective temperature profiles can comprise at least one of: a positive temperature ramp (heating ramp), a negative temperature ramp (cooling ramp), a temperature plateau. Respective positive or negative ramps can be linear or non-linear ramps, for example.

In further exemplary embodiments of the method, at least step c) can be performed via a controller (such as controller 80), particularly via at least one algorithm of a controller, which is configured to compare the at least one determined property of the three-dimensional object with at least one reference property, particularly a target property, of a reference three-dimensional object, particularly a target three-dimensional object, and generating a comparison information indicative of the comparison result. Likewise, step d) and e), at least with respect to the determination if the threshold value is exceeded or not, can be performed via the or a controller, particularly via at least one algorithm of a controller, which is configured to determine if the comparison result indicates that a deviation between the determined at least one property of the three-dimensional object and the at least one reference property of the reference three-dimensional object exceeds a threshold value; and, if the comparison result indicates that a deviation between the determined at least one property of the three-dimensional object and the at least one reference property of the reference three-dimensional object exceeds the threshold value, control the change of at least one of: at least one parameter of the geometric model of the three-dimensional object to be manufactured, at least one process parameter of the volumetric printing process, at least one process parameter of a post-processing process.

Particularly, the controller 80 can comprise one or more algorithms adapted to change at least one of: at least one parameter of the geometric model of the at least one three-dimensional object to be manufactured, at least one process parameter of the volumetric printing process, at least one process parameter of a post-processing process, with respect to at least one target criterion. A respective target criterion can be or comprise one or more target properties of the at least one three-dimensional object to be printed. Respective target properties can comprise chemical and/or physical properties of the three-dimensional object to be printed. As indicated above, chemical properties can comprise at least one of: a chemical composition of the at least one three-dimensional object printed in step a), and a chemically reactive state of the at least one three-dimensional object printed in step a), particularly a polymerization state of the at least one three-dimensional object printed in step a). As further indicated above, physical properties can comprise at least one of: an acoustic property, an optical property, a geometric property, a mechanical property, a surface property, an electric property, a thermal property, a magnetic property of the at least one three-dimensional object printed in step a).

Fig. 4 shows exemplary embodiments of three-dimensional objects O1 - O3 manufactured in accordance with the method of Fig. 3 and a reference object RO. Particularly, Fig. 4 shows how the implementation of the method can iteratively reduce an exemplary undesired deformation of a three-dimensional object, see the exemplary curved top portions of three-dimensional objects O1 and O2, such that, after one or more stages of performing the method, a three-dimensional object O3 can be manufactured which corresponds to a reference three-dimensional object RO. More particularly, Fig. 4 shows how, with every stage of performing steps a) - e) of the method, a respective undesired deformation can be reduced, particularly iteratively reduced. In the example, after the first stage of the method, three-dimensional object O1 is obtained which comprises fairly strong deformation, after an exemplary further stage of the method, further three-dimensional object O2 is obtained which comprises a reduced deformation with respect to three-dimensional object O1, and after another exemplary further stage of the method, further three-dimensional object O3 is obtained which has no or only negligible deformation such that its shape corresponds to the shape of the reference object RO and a deviation, if any, between a determined at least one property of the three-dimensional object and at least one reference property of the reference three-dimensional object RO does not exceed at least one threshold value. Notably, this principle can apply to any property of a respective three-dimensional object and is thus, not limited to the shape as an exemplary property.

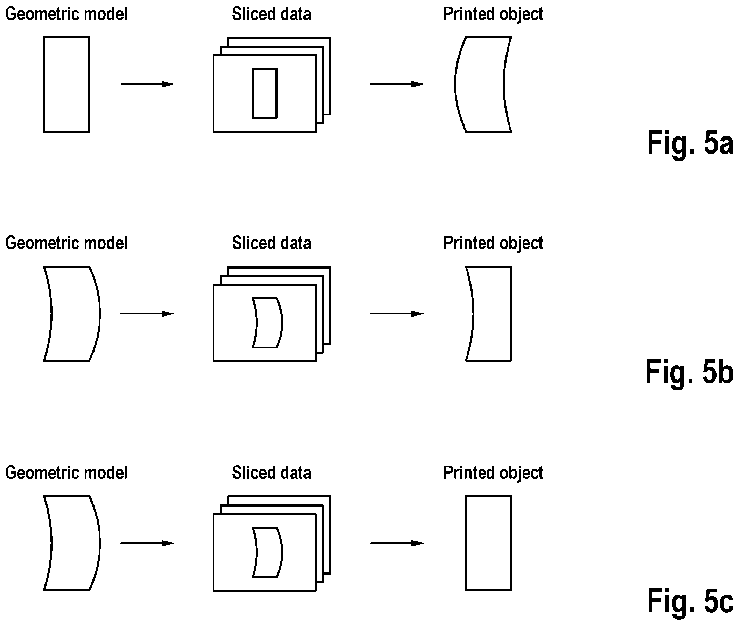

Fig. 5 shows in Fig. 5a - 5c a principle drawing of an exemplary embodiment of a method for manufacturing a three-dimensional object via volumetric printing according to another exemplary embodiment. Notably, the volumetric printing process comprises multi-color photopolymerization, particularly dual-color photopolymerization and does not comprise computed axial lithography.

This particularly, applies as the method, specifically as it comprises multi-color photopolymerization, particularly dual-color photopolymerization, can comprise a data processing step in which images corresponding to a cross-sectional geometry of a three-dimensional object or a plurality of points or lines corresponding to a cross-sectional geometry of the three-dimensional object can be generated via data processing, particularly slicing, of a geometric model of the at least one three-dimensional object (see Fig. 5a). Particularly, Fig. 5a shows how a geometric model of a three-dimensional object can be processed, particularly via slicing, to generate sliced data comprising two-dimensional images (slices) of the three-dimensional object each corresponding to a cross-sectional geometry of the three-dimensional object, which sliced data is then used to print via multi-color photopolymerization, particularly dual-color photopolymerization, a three-dimensional object.

Fig. 5b shows the same process when a modified model of the three-dimensional object is used, wherein the modification has been made in accordance with the principles of changing the at least one parameter of the geometric model of the three-dimensional object of Fig. 5a by changing information of a CAD-file, particularly a STL-file, concerning the model of the three-dimensional object to be manufactured, as specified above. Hence, in Fig. 5b, a modified geometric model of a three-dimensional object is processed, particularly via slicing, to generate sliced data comprising two-dimensional images (slices) of the three-dimensional object each corresponding to a cross-sectional geometry of the three-dimensional object, which sliced data is then used to print via multi-color photopolymerization, particularly dual-color photopolymerization, a three-dimensional object.

Fig. 5c shows the same process when a further modified model of the three-dimensional object is used, wherein the modification has been made in accordance with the principles of changing the at least one parameter of the modified geometric model of the three-dimensional object of Fig. 5b by changing information of a CAD-file, particularly a STL-file, concerning the model of the three-dimensional object to be manufactured, as specified above. Hence, in Fig. 5c, a further modified geometric model of a three-dimensional object is processed, particularly via slicing, to generate sliced data comprising two-dimensional images (slices) of the three-dimensional object each corresponding to a cross-sectional geometry of the three-dimensional object, which sliced data is then used to print via multi-color photopolymerization, particularly dual-color photopolymerization, a three-dimensional object.

The principle shown in Fig. 5a - c can thus, comprise multiple iterations each comprising changing at least one parameter of the geometric model of the three-dimensional object to be printed.

In either case, the method can, specifically when it comprises multi-color photopolymerization, particularly dual-color photopolymerization, can comprise, as indicated above, a data processing step in which images corresponding to a cross-sectional geometry of a three-dimensional object or a plurality of points or lines corresponding to a cross-sectional geometry of the three-dimensional object can be directly generated via data processing of a geometric model of the at least one three-dimensional object and, additionally or alternatively, a data processing step (which can also be deemed an inverse data processing step) in which a geometric model of at least one three-dimensional object can be directly generated via data processing of one or more images corresponding to a cross-sectional geometry of the three-dimensional object or from a plurality of points or lines corresponding to a cross-sectional geometry of the three-dimensional object.

As indicated above, a respective first data processing can e.g. comprise slicing the geometric model of the at least one three-dimensional object into a plurality of slices of defined geometry, particularly defined thickness, via a slicing algorithm or a slicing software, respectively, and a respective second data processing can e.g. comprise a combining the respective images, points, lines corresponding to a cross-sectional geometry of the three-dimensional object to reproduce a geometric model of at least one three-dimensional object via a geometric model reproducing algorithm or a geometric model reproducing software, respectively. Each of the first and second data processing steps can be implemented highly efficient e.g. because, respective slices can be directly obtained from the geometric model of the three-dimensional object to be manufactured in the first data processing step and a respective geometric model of the three-dimensional object can be directly obtained from respective slices of the three-dimensional object, respectively. These two data processing steps can also enable that any modifications of a geometric model of a three-dimensional object, such as e.g. a CAD-file or - model or a STL-file or -model, can be efficiently modified in a comparatively low number of steps, particularly when compared to volumetric printing processes which comprise computed axial lithography (CAL) or similar volumetric printing processes.

## Claims

1. A method for manufacturing a three-dimensional object via volumetric printing, the method comprising the following steps:
a) performing a volumetric printing process to manufacture a three-dimensional object on basis of data comprising information of a geometric model of the three-dimensional object to be manufactured, wherein the volumetric printing process comprises at least one irradiation process which comprises irradiating a photocurable resin with light of a first wavelength and light of a second wavelength, which is different from the first wavelength, to form, by multi-color photopolymerization, particularly by dual-color photopolymerization, a three-dimensional object in at least one direction, wherein the volumetric printing process is performed on basis of a number of process parameters;
b) determining at least one property of the three-dimensional object and generating a determination information indicative of the at least one determined property of the three-dimensional object;
c) comparing the at least one determined property of the three-dimensional object with at least one reference property, particularly a target property, of a reference three-dimensional object, particularly a target three-dimensional object, and generating a comparison information indicative of the comparison result;
d) determining if the comparison result indicates that a deviation between the determined at least one property of the three-dimensional object and the at least one reference property of the reference three-dimensional object exceeds a threshold value; and
if the comparison result indicates that a deviation between the determined at least one property of the three-dimensional object and the at least one reference property of the reference three-dimensional object exceeds the threshold value, changing at least one of: at least one parameter of the geometric model of the three-dimensional object to be manufactured, at least one process parameter of the volumetric printing process, at least one process parameter of a post-processing process;
e) repeating steps a) - d) with the changed at least one parameter of the geometric model of the three-dimensional object to be manufactured and/or with the changed parameter of the at least one process parameter of the volumetric printing process and/or with the changed parameter of the at least one process parameter of the post-processing process until the comparison result indicates that the deviation between the determined at least one property of the three-dimensional object and the at least one reference property of the reference three-dimensional object does not exceed the threshold value.

2. The method of claim 1, wherein determining at least one property of the three-dimensional object and generating the determination information indicative of the at least one determined property of the three-dimensional object comprises determining at least one chemical and/or physical property of the three-dimensional object.

3. The method of claim 2, wherein the at least one chemical property is or comprises a chemical composition of the three-dimensional object, a chemically reactive state of the three-dimensional object, particularly a polymerization state of the three-dimensional object.

4. The method of claim 2 or 3, wherein the at least one physical property is or comprises at least one of: an acoustic property, an optical property, a geometric property, a mechanical property, a surface property, an electric property, a thermal property, a magnetic property of the three-dimensional object.

5. The method of any one of the preceding claims, wherein the at least one determined property of the three-dimensional object is indicative of a deformation of the three-dimensional object relative to the reference three-dimensional object.

6. The method of any one of the preceding claims, wherein the at least one property of the three-dimensional object is determined via a measurement device configured to measure at least one chemical and/or physical property of the three-dimensional object.

7. The method of any one of the preceding claims, wherein changing the at least one parameter of the geometric model of the three-dimensional object to be manufactured comprises changing information of a CAD-file, particularly a STL-file, concerning the model of the three-dimensional object to be manufactured.

8. The method of claim 6, wherein at least one image parameter, particularly a pixel, a voxel, or a vertex, of the model of the three-dimensional object to be manufactured is changed.

9. The method of any one of the preceding claims, wherein changing the at least one process parameter of the volumetric printing process comprises changing at least one of: at least one parameter, e.g. irradiation time, irradiation intensity, wavelength of irradiation light, of an irradiation process of irradiating a photocurable resin within a working volume, printing speed, a printing direction, an orientation of the three-dimensional object within the working volume a motion path along which the working volume is moved during the irradiation process, at least one parameter of the photocurable resin used for volumetric printing the three-dimensional object, at least one parameter of handling the three-dimensional object, e.g. for transferring it from a volumetric printing device to a post-processing device.

10. The method of any one of the preceding claims, wherein changing the at least one process parameter of the post-processing process comprises changing at least one of: post-processing time, post-processing intensity.

11. The method of any one of the preceding claims, wherein step b) is performed via a determination device, particularly an optical determination device, more particularly a scanner, a microscope, a profilometer, and/or via a testing device configured to perform a test of at least one property of the three-dimensional object with respect to an intended application and/or function of the three-dimensional object.

12. The method of any one of the preceding claims, wherein step c) is performed via a controller, particularly via a comparison algorithm of a controller, which is configured to compare the at least one determined property of the three-dimensional object with at least one reference property, particularly a target property, of a reference three-dimensional object, particularly a target three-dimensional object, and generating a comparison information indicative of the comparison result.

13. A system for manufacturing a three-dimensional object via volumetric printing, the system comprising:
- a volumetric printing device for performing a volumetric printing process to manufacture a three-dimensional object on basis of data comprising information of a geometric model of the three-dimensional object to be manufactured, wherein the volumetric printing process comprises at least one irradiation process which comprises irradiating a photocurable resin with light of a first wavelength and light of a second wavelength, which is different from the first wavelength, to form, by multi-color photopolymerization, particularly by dual-color photopolymerization, a three-dimensional object in at least one direction, wherein the volumetric printing process is performed on basis of a number of process parameters;
- a determination device for determining at least one property of the three-dimensional object and generating a determination information indicative of the at least one determined property of the three-dimensional object;
- a controller for comparing the at least one determined property of the three-dimensional object with at least one reference property, particularly a target property, of a reference three-dimensional object, particularly a target three-dimensional object, and generating a comparison information indicative of the comparison result;
wherein the controller is configured to perform the following steps:
determine if the comparison result indicates that a deviation between the determined at least one property of the three-dimensional object and the at least one reference property of the reference three-dimensional object exceeds a threshold value; and
if the comparison result indicates that a deviation between the determined at least one property of the three-dimensional object and the at least one reference property of the reference three-dimensional object exceeds the threshold value, change at least one of: at least one parameter of the geometric model of the three-dimensional object to be manufactured, at least one process parameter of the volumetric printing process, at least one process parameter of a post-processing process.

14. A computer program product comprising instructions to cause the controller of the system of claim 13 to execute the steps of the method of at least claim 1.
